(19)

Europäisches Patentamt
European Patent Office
Office européen des brevets

(11)  **EP 3 413 089 B1**

(12)  **EUROPEAN PATENT SPECIFICATION**

(45) Date of publication and mention
of the grant of the patent:
**16.10.2019  Bulletin 2019/42**

(51) Int Cl.:
*G01S 19/29* [(2010.01)]      *G01S 19/30* [(2010.01)]
*H04B 1/707* [(2011.01)]

(21) Application number: **18175795.6**

(22) Date of filing: **04.06.2018**

(54) **SEQUENTIAL CHIP MIXED FREQUENCY CORRELATOR ARRAY SYSTEM**

SEQUENZIELLES CHIP-MISCHFREQUENZ-KORRELATOR-ARRAY-SYSTEM

SYSTÈME DE RÉSEAU DE CORRÉLATEUR À FRÉQUENCE MIXTE DE PUCE SÉQUENTIELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2017  IN 201741020080
09.08.2017  US 201715672326**

(43) Date of publication of application:
**12.12.2018  Bulletin 2018/50**

(73) Proprietor: **Accord Software & Systems Private
Limited
560071 Karnataka (IN)**

(72) Inventors:
• **NAVEEN, Gowdayyanadoddi Shivaiah
562159 Karnataka (IN)**
• **NAYAK, Smitha Shrinivasa
575008 Karnataka (IN)**
• **BAVACHE, Varsha Bhupal
590016 Karnataka (IN)**

(74) Representative: **Gill, David Alan
WP Thompson
138 Fetter Lane
London EC4A 1BT (GB)**

(56) References cited:
**WO-A1-02/23327          US-A- 6 151 353
US-A1- 2011 241 938    US-B2- 7 936 846**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Global navigation satellite system (GNSS) constellations include, for example, the global positioning system (GPS) constellation, the Globalnaya Navigatsionnaya Sputnikovaya Sistema (GLONASS) constellation, the Galileo constellation, the BeiDou navigation satellite system constellation, the Indian regional navigation satellite system (IRNSS) constellation, the Quasi-Zenith satellite system (QZSS) constellation, and constellations of satellite based augmentation systems (SBAS) in well-defined geostationary orbits. Each satellite in the GNSS constellations continuously broadcasts GNSS signals that contain accurate system time and an orbital position of the corresponding satellite. In general, the GNSS constellations use a channel access method, for example, a code division multiple access (CDMA) technique or a frequency division multiple access (FDMA) technique for broadcasting the GNSS signals. In the CDMA technique, multiple GNSS signals are simultaneously transmitted over a single communication channel, for example, by multiplexing multiple GNSS signals onto the same frequency. Furthermore, in the CDMA technique, each satellite in the GNSS constellations is assigned a pseudo random noise (PRN) code that is used to modulate a broadcasted GNSS signal. For example, the GPS constellation contains three PRN codes comprising, for example, a coarse/acquisition (C/A) code, a military (M code), and a precision (P) code. In the FDMA technique used, for example, by the GLONASS constellation, each satellite is assigned a center frequency that is modulated using a common PRN code to spread power. Furthermore, channel selection of each satellite in the FDMA technique is based on frequency separation.

In a global navigation satellite system (GNSS), a GNSS receiver capable of measuring position, velocity, and accurate time using a GNSS signal comprises an antenna for receiving GNSS signals, a radio frequency front end for downconverting and digitizing GNSS signals received by the antenna, and a GNSS baseband engine for acquiring and tracking the digitized GNSS signals. In a typical GNSS receiver architecture, the major computationally intensive part of the GNSS receiver is the GNSS baseband engine. The GNSS baseband engine comprises multiple correlators that allow the GNSS receiver to achieve high sensitivity to extract and calculate a position for a weak GNSS signal, and an optimal time to first fix, which is a measure of time needed by the GNSS receiver to acquire satellite signals and navigation data, and calculate a position solution, referred to as a "fix". Conventionally, the correlators in the GNSS baseband engine of the GNSS receiver are used during an acquisition and tracking stage of GNSS signal processing. The GNSS receiver assigns one or more correlators for acquiring and tracking each individual GNSS signal. With ever increasing GNSS constellations, there is an increased need for GNSS receivers capable of receiving and processing multiple GNSS signals transmitted by satellites in all the GNSS constellations.

In a conventional multi-frequency global navigation satellite system (GNSS) receiver, each GNSS signal from each satellite is processed independently. The GNSS baseband engine of the multi-frequency GNSS receiver comprises multiple parallel correlators for achieving an optimal time to first fix and high sensitivity. The multi-frequency GNSS receiver assigns one or more correlators for acquiring and tracking each individual GNSS signal and searching a particular frequency and a pseudo random noise (PRN) code delay. For example, in a typical commercial global positioning system (GPS) receiver, a frequency search space ranges from about -10 kilohertz (KHz) to about +10 KHz and searched in steps of about 250 Hertz (Hz). The PRN code delay search space is, for example, about 1023 chips and is searched in steps of about 0.5 chips. Hence, in total, there are 80 frequency bins and 2046 code delay bins to be searched. Since a GNSS signal requires a simultaneous search in both frequency and code, the total search space is, for example, 160,000 bins. Therefore, 160,000 parallel correlators are required to perform a search for a single GPS satellite at a given time. Assigning one or more correlators to acquire and track each individual GNSS signal and search a particular frequency and a PRN code delay increases logic area and power consumption of the GNSS receiver. While conventional GNSS receivers are configured to receive GNSS signals from different GNSS constellations to provide accurate and reliable position, velocity, and time, the tradeoff is the increased size of the GNSS receivers and the power consumption. Hence, there is a need for a multi-frequency GNSS receiver with reduced logic area and power consumption.

A standard correlator comprising a local carrier generator, a complex mixer, a pseudo random noise (PRN) code generator, two simple mixers, and two accumulators is used for processing complex intermediate frequency (IF) data represented as (a+jb) of a single global navigation satellite system (GNSS) signal, where "a" refers to a real part of the complex IF data and "jb" refers to an imaginary part of the complex IF data, and where "j" is an imaginary unit equal to square root of negative one, that is, $j = \sqrt{-1}$. The processing of the complex IF data comprises searching a frequency and a PRN code delay. The local carrier generator generates a complex carrier signal represented as (c+jd), where "c" refers to a real part of the complex carrier signal and "jd" refers to an imaginary part of the complex carrier signal, and where "j" is an imaginary unit equal to square root of negative one, that is, $j = \sqrt{-1}$. A carrier signal is an oscillating signal in the form of a transmitted electromagnetic pulse or wave suitable for modulation by an information bearing signal, for example, the GNSS signal. The complex mixer mixes N samples of incoming complex IF data (a+jb) with a locally generated complex carrier signal (c+jd) for producing inphase ((ac-bd), real valued) components and quadrature phase ((ad+bc), imaginary valued) components. The PRN code generator generates a PRN code bit sequence for a particular satellite. The two simple mixers mix the PRN code bit sequence and the inphase components and the quadrature phase components of the complex mixer output.

The two accumulators of the standard correlator coherently accumulate inphase ($I_f$) and quadrature phase ($Q_f$) correlation components of the N samples of the IF data, dump the accumulated result, and continue accumulation of the $I_f$ and the $Q_f$ correlation components of the next N samples of the IF data. The rate of output of the accumulators is reduced by a factor of N as compared to the input complex IF data sampling rate, $f_s$. The $I_f$ and the $Q_f$ correlation components constitute one carrier frequency and one PRN code bit sequence. Typically, two standard correlators are required to compute correlation values of a positive frequency and a negative frequency for a single GNSS signal. If the incoming complex IF data is to be searched for a negative frequency, while searching for a positive frequency, then two standard correlators are required for searching positive components and negative components of the same frequency bin, where the frequency bin refers to magnitude of the frequency only and not the sign of the frequency, and where one correlator searches for the negative frequency and the other correlator searches for the positive frequency. Both these correlators search the incoming complex IF data for the same PRN code bit sequence for both the positive components and the negative components of the same frequency bin. This doubles the required logic area and increases power consumption of the standard correlator. Hence, there is a need for a single correlator that computes correlation values of a positive frequency and a negative frequency for a single GNSS signal.

A common method for reducing the size and power consumption of a global navigation satellite system (GNSS) receiver is use of an application specific integrated circuit (ASIC) for processing multiple GNSS signals. However, even with the ASIC, many commercial applications are battery operated and require substantially low power consumption with a low cost of the ASIC. The cost of the ASIC is driven by the logic area which in turn is governed by the architecture of the GNSS receiver. The large number of parallel correlators in the GNSS receiver used for achieving an optimal time to first fix and high sensitivity, which are specifications for most battery operated applications, increases the logic area of the GNSS receiver. Increase in the logic area of the GNSS receiver increases the power consumption and cost of the GNSS receiver. Hence, there is need for a method for reducing the logic area of a GNSS receiver and consecutively reducing the power consumption and the cost of the ASIC chipset of the GNSS receiver.

U.S. Patent Publication No. 20110241938A1 discloses an implementation of a GNSS receiver that achieves reduced TTFF without a significant increase in gate count of the hardware. U.S. Patent No. 6151353 discloses a direct sequence spread spectrum (DSSS) signal processing architecture which permits the receiver to be turned off during most of the acquisition phase of reception, thereby permitting the on time of the associated receiver front end to be significantly reduced. WIPO publication No. 2002023327A1 discloses an apparatus and method that allow receivers to quickly acquire a pseudorandom noise signal. A receiver advantageously detects frequency shifts using a compact parallel process hardware implementation of Discrete Fourier Transform (DFT). Hence, there is a long felt need for a global navigation satellite system (GNSS) receiver with a sequential chip mixed frequency correlator array system comprising M mixed frequency correlators deployed in a GNSS baseband engine of the GNSS receiver with reduced logic area, reduced power consumption, and reduced cost of the application specific integrated circuit (ASIC) chipset of the GNSS receiver, where each M mixed frequency correlator generates correlation values for a positive frequency and a negative frequency of a single GNSS signal.

This summary is provided to introduce a selection of concepts in a simplified form that are further disclosed in the detailed description of the invention. This summary is not intended to determine the scope of the claimed subject matter.

The global navigation satellite system (GNSS) receiver disclosed herein addresses the above stated need for a sequential chip mixed frequency correlator array system comprising M mixed frequency correlators deployed in a GNSS baseband engine of the GNSS receiver with reduced logic area, reduced power consumption, and reduced cost of the application specific integrated circuit (ASIC) chipset of the GNSS receiver, where each M mixed frequency correlator generates correlation values for a positive frequency and a negative frequency of a single GNSS signal. The implementation of the GNSS receiver disclosed herein reduces the logic area and power consumption such that life of battery operated GNSS applications increases and facilitates the reduction of cost of the ASIC chipset of the GNSS receiver.

The sequential chip mixed frequency correlator array system of the global navigation satellite system (GNSS) receiver disclosed herein comprises P signal generators deployed in the GNSS baseband engine of the GNSS receiver. Each of the P signal generators comprises a primary mixer, a single pseudo random noise (PRN) code generator, and Q mixed frequency correlators. The primary mixer receives N samples of intermediate frequency (IF) data from a radio frequency down converter of the GNSS receiver and generates inphase components and quadrature phase components of the received N samples of the IF data by mixing the received N samples of the IF data with a carrier reference signal locally generated by a single local carrier generator. The N samples of the IF data correspond to a GNSS signal received by the radio frequency down converter. The PRN code generator generates a PRN code bit sequence corresponding to the received GNSS signal. The Q mixed frequency correlators are operably connected to the primary mixer and to the PRN code generator via a linear feedback shift register. Each of the Q mixed frequency correlators comprises secondary mixers and accumulator and dump units. The secondary mixers are operably connected to the primary mixer for generating discrete correlation components of the received N samples of the IF data by mixing the generated inphase components and the generated quadrature phase components of the received N samples of the IF data with the generated PRN code bit sequence. The accumulator and dump units are operably connected to corresponding secondary mixers for generating accumulated correlation components of the received N samples of the IF data by coherently accumulating and dumping the generated discrete correlation components of the received N samples of the IF data.

The global navigation satellite system (GNSS) receiver disclosed herein further comprises adders and subtractors operably connected to the sequential chip mixed frequency correlator array system (SCMFCAS). The adders and the subtractors are time division multiplexed for sequentially generating correlation values for a positive frequency and a negative frequency of the received N samples of the IF data by combining the accumulated correlation components of each of the Q mixed frequency correlators from each of the P signal generators. Time division multiplexing of the adders and the subtractors after the accumulation and the dumping of the generated discrete correlation components of the received N samples of the IF data, and the generation of the correlation values for the positive frequency and the negative frequency of the received N samples of the IF data using the accumulated correlation components of each of the Q mixed frequency correlators from each of the P signal generators reduce the logic area of the SCMFCAS in the GNSS baseband engine, thereby reducing power consumption of the GNSS receiver.

In one or more embodiments, related systems comprise circuitry and/or programming for effecting the methods disclosed herein. The circuitry and/or programming can be any combination of hardware, software, and/or firmware configured to effect the methods disclosed herein depending upon the design choices of a system designer. Also, various structural elements can be employed depending on the design choices of the system designer.

## BRIEF DESCRIPTION OF THE DRAWINGS

The foregoing summary, as well as the following detailed description of the invention, is better understood when read in conjunction with the appended drawings.

For the purpose of illustrating the invention, exemplary constructions of the invention are shown in the drawings. However, the invention is not limited to the specific methods and components disclosed herein. The description of a method step or a component referenced by a numeral in a drawing is applicable to the description of that method step or component shown by that same numeral in any subsequent drawing herein.

FIG. 1 exemplarily illustrates a global navigation satellite system receiver comprising a sequential chip mixed frequency correlator array system deployed in a global navigation satellite system baseband engine.

FIG. 2 illustrates a satellite signal acquisition module of the global navigation satellite system receiver, showing **P** signal generators of the sequential chip mixed frequency correlator array system.

FIG. 3 illustrates components of one of the M mixed frequency correlators of the sequential chip mixed frequency correlator array system operably connected to a post correlation unit of the satellite signal acquisition module.

FIG. 4 exemplarily illustrates an embodiment, showing a carrier frequency offset module deployed in the global navigation satellite system baseband engine for offsetting carrier frequency of N samples of intermediate frequency data.

FIG. 5 illustrates a method for generating correlation values for a positive frequency and a negative frequency of a single global navigation satellite system signal received by a radio frequency down converter of the global navigation satellite system receiver.

FIG. 6 exemplarily illustrates a method for setting up the sequential chip mixed frequency correlator array system for generating accumulated correlation components of N samples of intermediate frequency data.

FIGS. 7A-7B exemplarily illustrate a flowchart comprising the steps for generating correlation values for a positive frequency and a negative frequency of a single global navigation satellite system signal.

FIG. 8 exemplarily illustrates a comparison table representing bit widths for parameters at different stages of correlation in a standard correlator and in one of the M mixed frequency correlators of the sequential chip mixed frequency correlator array system.

FIG. 9 exemplarily illustrates a comparison table representing resource comparison between two standard correlators and one of the M mixed frequency correlators of the sequential chip mixed frequency correlator array system.

## DETAILED DESCRIPTION OF THE INVENTION

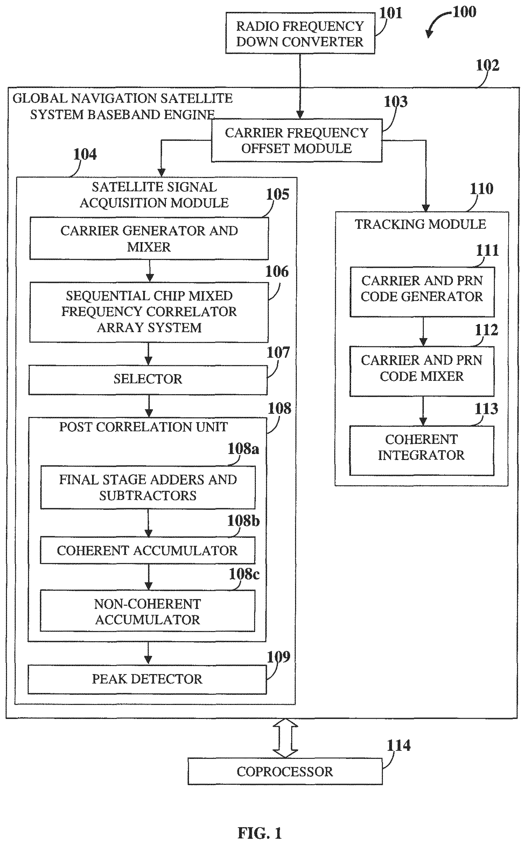

FIG. **1** exemplarily illustrates a global navigation satellite system (GNSS) receiver **100** comprising a sequential chip mixed frequency correlator array system **106** deployed in a GNSS baseband engine **102.** The GNSS receiver **100** is used for acquiring and tracking multiple GNSS signals. As used herein, a "global navigation satellite system signal" refers to a navigation signal transmitted by a satellite in a GNSS constellation. For example, a global positioning system (GPS) satellite transmits GPS signals in one of L1, L2, and L5 frequency bands. The GNSS receiver **100** is programmable for acquiring a particular GNSS signal out of multiple GNSS signals used for global navigation. The GNSS receiver **100** receives a GNSS signal and acquires the received GNSS signal, if the received GNSS signal is the same as the GNSS signal programmed for acquisition. The GNSS signal received by the GNSS receiver **100** comprises a complex signal and/or a real signal having a frequency range of, for example, about 1151 megahertz (MHz) to about 2492 MHz. The GNSS signal further comprises multiple ranging codes, for example, pseudo random noise codes, and navigation data including 50 bits per second navigation data in a GPS L1 coarse/acquisition (C/A) signal. As used herein, a "pseudo random noise code" refers to a unique binary code sequence of +1s and -1s that enables the GNSS receiver **100** to identify the satellite that transmits the GNSS signal. The pseudo random noise codes are not truly random but have a finite length and are known to both a GNSS satellite and the GNSS receiver **100.**

The global navigation satellite system (GNSS) receiver **100** disclosed herein comprises a radio frequency (RF) down converter **101,** the GNSS baseband engine **102,** and a coprocessor **114** as exemplarily illustrated in FIG. **1.** In an embodiment, the RF down converter **101,** the GNSS baseband engine **102,** and the coprocessor **114** are implemented in a single chip. In another embodiment, the RF down converter **101,** the GNSS baseband engine **102,** and the coprocessor **114** are implemented independently on separate chips. In another embodiment, any combination of the RF down converter **101,** the GNSS baseband engine **102,** and the coprocessor **114** can be implemented as an application specific integrated circuit (ASIC) or a field programmable gate array (FPGA). The RF down converter **101** is an integrated circuit that down converts the acquired GNSS signal to an intermediate frequency (IF) signal. As used herein, "intermediate frequency signal" refers to a down converted GNSS signal. In an embodiment, the RF down converter **101** comprises an analog-to-digital converter (ADC) (not shown). The ADC samples the IF signal at a sampling rate or a sampling frequency, that is, $f_s$ megahertz (MHz) for generating N samples of IF data. In an example, if the GNSS receiver **100** receives a GNSS signal having a frequency of 1575.42 MHz, the RF down converter **101** down converts the received GNSS signal with the frequency of 1575.42 MHz to an IF signal with a frequency of $f_{IF}$ MHz. The ADC samples the IF signal with $f_{IF}$ MHz at a rate of $f_s$ MHz to generate N samples of IF data, where in one example, $f_{IF=}$ 4.092 MHz and $f_s$ =16.368 MHz, and in another example $f_{IF=}$ 10.22 MHz and $f_s$ = 45.15 MHz.

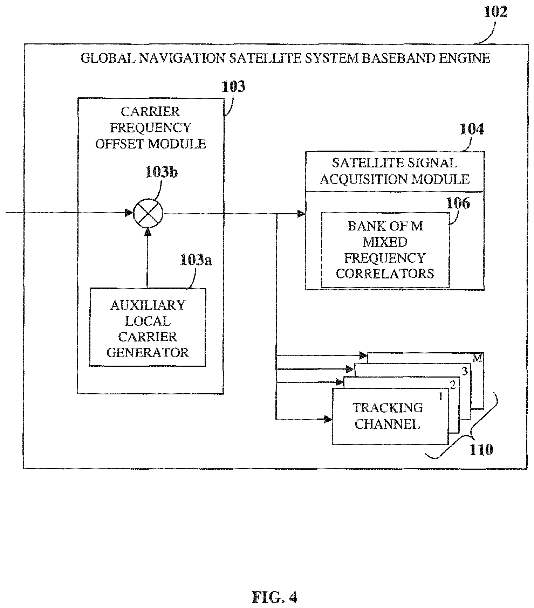

The global navigation satellite system (GNSS) baseband engine **102** of the GNSS receiver **100** is implemented as an application specific integrated circuit (ASIC) or a field programmable gate array (FPGA) for processing the GNSS signal acquired by the GNSS receiver **100.** The GNSS baseband engine **102** receives the N samples of the intermediate frequency (IF) data from the radio frequency (RF) down converter **101.** The GNSS baseband engine **102** comprises a satellite signal acquisition module **104** and a tracking module **110** for acquiring and tracking a GNSS signal used for global navigation respectively. In an embodiment where the N samples of the IF data are at non-zero IF, the GNSS baseband engine **102** comprises a carrier frequency offset module **103** operably connected to the RF down converter **101.** The carrier frequency offset module **103** is operably connected between the RF down converter **101,** and the satellite signal acquisition module **104** and the tracking module **110** as exemplarily illustrated in FIG. 1. The carrier frequency offset module **103** receives the N samples of the IF data from the RF down converter **101** and brings the carrier frequency of the N samples of the IF data to zero or near zero by mixing the N samples of the IF data with a locally generated offsetting carrier reference signal having a frequency equal to the IF, before passing the N samples of the IF data to the satellite signal acquisition module **104** and the tracking module **110.** The carrier frequency offset module **103** receives the N samples of the IF data transmitted by the RF down converter **101** and determines whether the carrier frequency of the N samples of the IF data is at zero value or a near zero value. If the carrier frequency of the N samples of the IF data is not at zero value or a near zero value, the carrier frequency offset module **103** offsets the carrier frequency of the N samples of the IF data to zero value or a near to zero value by mixing the N samples of the IF data with the locally generated offsetting carrier reference signal as disclosed in the detailed description of FIG. **4.**

The satellite signal acquisition module **104** of the global navigation satellite system (GNSS) baseband engine **102** comprises a carrier generator and mixer **105,** the sequential chip mixed frequency correlator array system (SCMFCAS) **106,** a selector **107,** a post correlation unit **108,** and a peak detector **109.** The carrier generator and mixer **105** comprises a carrier numerically controlled oscillator (NCO) (not shown), a code NCO (not shown), and a carrier mixer (not shown). The carrier NCO is a digital signal generator that generates a local copy of a carrier signal with a carrier Doppler frequency offset, where the carrier Doppler frequency offset is programmable. The code NCO generates a signal with a programmed code Doppler frequency that is used to generate a pseudo random noise (PRN) code. The code Doppler frequency is derived from the carrier Doppler frequency. The carrier generator and mixer **105** of the satellite signal acquisition module **104** receives the N samples of the zero or near zero IF data, for example, (p, q), transmitted by the carrier frequency offset module **103,** where the N samples of the zero or near zero IF data refers to the N samples of the IF data with zero or near zero carrier frequency. The received N samples of the zero or near zero IF data contain oscillator drifts of the GNSS receiver **100** along with a frequency deviation due to a relative motion between the GNSS receiver **100** and satellites of the GNSS constellation. The frequency of the N samples of the zero or near zero IF data comprising the frequency deviation and the oscillator drifts is referred to as "Doppler frequency". The Doppler frequency is in the range of, for example, about +128 kilohertz (KHz) to about -128 KHz. For example, if the SCMFCAS **106** is used to process the N samples of the zero or near zero IF data having a Doppler frequency ($\Delta F_b$) of + 128 KHz and -128 KHz, code bits generated by the code NCO will have a significant drift in the PRN code that is generated.

The carrier numerically controlled oscillator (NCO) of the carrier generator and mixer **105** generates a local copy of the carrier signal in the frequency range of, for example, about +128 KHz to about -128 KHz or higher. Consider an example where the carrier NCO generates a carrier signal of a carrier Doppler frequency +128 KHz. The code NCO generates a code Doppler frequency, derived from the carrier Doppler frequency, which is used for generating pseudo random noise (PRN) code bits. Therefore, the code NCO generates a code Doppler frequency that corresponds to +128 KHz of the carrier frequency offset being searched, which operates normally for a mixed frequency correlator in the sequential chip mixed frequency correlator array system (SCMFCAS) **106** that corresponds to the carrier Doppler frequency +128 KHz. As used herein, "mixed frequency correlator" refers to a correlator used in the SCMFCAS **106** within the satellite signal acquisition module **104** during an acquisition stage of global navigation satellite system (GNSS) signal processing for simultaneously processing two frequencies, that is, a positive frequency and a negative frequency of a GNSS signal transmitted by the satellites in the GNSS constellation. The carrier Doppler frequency refers to a sum of oscillator drifts and a frequency shift caused by the rate of change in range with reference to a satellite and the GNSS receiver **100.** However, the mixed frequency correlator that corresponds to the carrier Doppler frequency -128 KHz expects the code NCO to generate a code Doppler frequency that corresponds to -128 KHz.

Due to the change in the code Doppler frequency from +128 KHz to -128 KHz, the generated pseudo random noise (PRN) code bit drifts in the opposite direction compared to that of the generated PRN code bit at a frequency bin searching +128 KHz. The drift in the generated PRN code bit limits total integration time as power spreads across multiple PRN code bit correlators, if integrated beyond a certain time period (T). The time period (T) over which the total PRN code bit drift is less than 0.25 code chip is accepted during typical acquisition. The PRN code bit drift at the mixed frequency correlator operating at -128 KHz is computed as code drift = T * 2 * $\Delta F_b$, where $\Delta F_b$ is the Doppler frequency. If the code NCO generates a 0 hertz (Hz) code Doppler frequency, then the drift at +128 KHz and -128 KHz is equal and is computed as (T * $\Delta F_b$). To reduce the impact of the Doppler frequency, the carrier generator and mixer **105** employs two-stage carrier generation and mixing. The full carrier Doppler frequency search range is split into multiple sub ranges, each with its own center frequency. In the first stage, the carrier generator and mixer **105** brings down the center frequency of each of the carrier Doppler frequency sub ranges to zero. The code NCO generates a code Doppler frequency that is proportional to the center frequency of the carrier Doppler frequency sub range. The second stage enables searching of the frequencies around 0 Hz within a bandwidth of each sub range. This reduces the maximum deviation between the carrier Doppler frequency and the code Doppler frequency, that is, code drift to +/- (sub range bandwidth/2). Thus, the code drift of the generated PRN code bits is small, thereby providing a longer integration time period. The carrier mixer of the carrier generator and mixer **105** mixes the received N samples of the zero or near zero IF data (p,q) with the generated local copy of the carrier signal to generate N samples of the zero or near zero IF data, that is, (a, b). The output of the carrier generator and mixer **105** is represented, for example, as (a+jb), where "a" refers to a real part of the complex IF data and "jb" refers to an imaginary part of the complex IF data, and where "j" is an imaginary unit equal to square root of negative one, that is, $j = \sqrt{-1}.$ The generated N samples of the zero or near zero IF data contain lower oscillator drifts and lower frequency deviations.

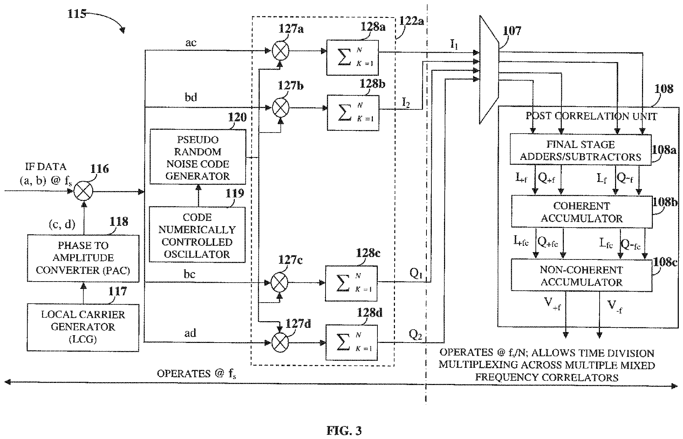

The sequential chip mixed frequency correlator array system (SCMFCAS) **106** comprises P signal generators deployed in the global navigation satellite system (GNSS) baseband engine **102,** where P is a positive integer. Each of the P signal generators comprises Q mixed frequency correlators, where Q is a positive integer. A product of the number of signal generators (P) and the number of mixed frequency correlators per signal generator (Q) provides a total number of mixed frequency correlators (M) in the SCMFCAS **106,** that is, M = P*Q, where M is a positive integer. The SCMFCAS **106** processes the N samples of the intermediate frequency (IF) data transmitted by the carrier generator and mixer **105.** Each of the M mixed frequency correlators generates accumulated correlation components of the N samples of the IF data corresponding to the received GNSS signal. As used herein, "accumulated correlation components" refer to values that indicate correlation between the N samples of the IF data with the locally generated pseudo random noise (PRN) code and the locally generated carrier signal as disclosed in the detailed description of FIG. 3.

The selector 107 of the satellite signal acquisition module 104, for example, a multiplexer, is programmable for selecting the generated accumulated correlation components of the N samples of the IF data from one of the M mixed frequency correlators of the sequential chip mixed frequency correlator array system (SCMFCAS) 106. The selector 107 transmits the selected accumulated correlation components of the N samples of the IF data to the post correlation unit 108. To increase the signal-to-noise ratio, the selected accumulated correlation components of the N samples of the IF data are further coherently and/or non-coherently integrated, in the post correlation unit 108 to obtain new correlation values. If the new correlation values are greater than a threshold value, then the global navigation satellite system (GNSS) receiver 100 declares that the GNSS signal that is being searched is present in the incoming GNSS signal, else the GNSS receiver 100 declares that the GNSS signal that is being searched is not present in the incoming GNSS signal.

The post correlation unit 108 of the satellite signal acquisition module 104 comprises final stage adders and subtractors 108a, a coherent accumulator 108b, and a non-coherent accumulator 108c. The final stage adders and subtractors 108a sequentially generate correlation values for a positive frequency and a negative frequency of the N samples of the intermediate frequency (IF) data by combining the accumulated correlation components of each of the Q mixed frequency correlators from each of the P signal generators. As used herein, "correlation values" refers to values that measure change in power and direction between two signals, for example, the received global navigation satellite system (GNSS) signal and a local carrier and pseudo random noise (PRN) code reference signal. As used herein, "local carrier and PRN code reference signal" refers to a combination of the carrier signal generated using a local carrier generator, that is, a carrier numerically controlled oscillator (NCO), and a PRN code bit sequence generated using a PRN code generator driven by a code NCO in the sequential chip mixed frequency correlator array system (SCMFCAS) 106. As used herein, "pseudo random noise code bit sequence" refers to a sequence of +1's and -1's that enables the GNSS receiver 100 to compute travelling time of the GNSS signal from a satellite to the GNSS receiver 100 and satellite coordinates at any epoch. The received GNSS signal is correlated with the local carrier and PRN code reference signal.

The coherent accumulator 108b of the post correlation unit 108 performs programmable coherent integration of the correlation values of the positive frequency and the negative frequency of the N samples of the intermediate frequency (IF) data to obtain coherent integration correlation values as disclosed in detailed description of FIG. 3. The non-coherent accumulator 108c performs programmable non-coherent integration of the correlation values of the positive frequency and the negative frequency of the N samples of the IF data to obtain non-coherent integration correlation values as disclosed in the detailed description of FIG. 3. The coherent integration operation and the non-coherent integration operation are performed over the outputs of the M mixed frequency correlators of the sequential chip mixed frequency correlator array system (SCMFCAS) 106 sequentially.

The peak detector 109 of the satellite signal acquisition module 104 detects a peak among the non-coherent integration values generated by the non-coherent accumulator 108c of the post correlation unit 108. The satellite signal acquisition module 104 acquires the received global navigation satellite system (GNSS) signal based on the detected peak. A high peak value is obtained if the received GNSS signal is the same as the local carrier and pseudo random noise (PRN) code reference signal and the satellite signal acquisition module 104 acquires the received GNSS signal. The satellite signal acquisition module 104 is sequentially processed at a rate of $Pxf_s$ for acquiring P GNSS signals, where P is any positive integer and $f_s$ is the sampling frequency used for sampling the down converted first GNSS signal. After acquisition, the GNSS receiver 100 enters a tracking mode.

The tracking module 110 of the global navigation satellite system (GNSS) baseband engine 102 is used for tracking a second GNSS signal. The tracking module 110 performs tracking of either a positive frequency GNSS signal or a negative frequency GNSS signal. The second GNSS signal can be either the GNSS signal acquired by the satellite signal acquisition module 104, or a GNSS signal specifically programmed for tracking. The tracking module 110 comprises a carrier and pseudo random noise (PRN) code generator 111, a carrier and PRN code mixer 112, and a coherent integrator 113. The carrier and PRN code generator 111 generates a carrier reference signal and a pseudo random noise (PRN) code bit sequence corresponding to the second GNSS signal. The PRN code bit sequence comprises, for example, a coarse/acquisition (C/A) code bit sequence, a military (M) code bit sequence, a precision (P) code bit sequence, and a maximal length code bit sequence.

The carrier and pseudo random noise (PRN) code mixer 112 of the tracking module 110 generates inphase components and quadrature phase components of the second global navigation satellite system (GNSS) signal by mixing the carrier reference signal with a down converted and sampled second GNSS signal. As used herein, "inphase components" refer to components that are offset in phase by a zero cycle (zero radians) in relation to the GNSS signal. The inphase components of the second GNSS signal are components that are inphase with the second GNSS signal. Also, as used herein, "quadrature phase components" refer to components that are offset in phase by a one-quarter cycle ($\pi$/2 radians) in relation to the GNSS signal. The quadrature phase components of the second GNSS signal are components that are 90° out of phase with the second GNSS signal. Furthermore, the carrier and PRN code mixer **112** generates correlation values of the second GNSS signal by mixing the inphase components and the quadrature phase components of the second GNSS signal with the PRN code bit sequence.

The coherent integrator **113** of the tracking module **110** generates coherent integration data by accumulating the correlation values of the second global navigation satellite system (GNSS) signal for a time duration that is programmed by the coprocessor **114**. The coprocessor **114** is in operable communication with the satellite signal acquisition module **104** and the tracking module **110** of the GNSS baseband engine **102**. The coprocessor **114** programs parameters comprising, for example, the carrier intermediate frequency (IF), the carrier frequency offset, the carrier Doppler frequency, the code Doppler frequency, the pseudo random noise (PRN) code and its code phase, a coherent integration period, and a non-coherent integration period, of the M mixed frequency correlators. The coprocessor **114** uses the satellite signal acquisition module **104** to search the entire frequency search range of the GNSS signal and also programs the tracking module **110** with the same set of parameters to continuously track the GNSS signal.

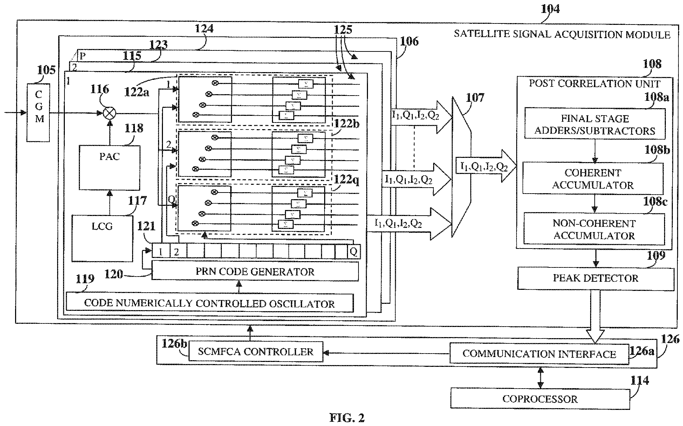

FIG. 2 exemplarily illustrates the satellite signal acquisition module **104** of the global navigation satellite system (GNSS) receiver **100** exemplarily illustrated in FIG. **1,** showing P signal generators **115, 123,** and **124** of the sequential chip mixed frequency correlator array system (SCMFCAS) **106,** where P is a positive integer. In an embodiment, the radio frequency (RF) down converter **101** of the GNSS receiver **100** transmits the N samples of the IF data to the SCMFCAS **106** through the carrier frequency offset module **103** and the carrier generator and mixer (CGM) **105** exemplarily illustrated in FIG. 1. The N samples of the IF data received by the SCMFCAS **106** comprises a zero offset carrier frequency. FIG. 2 exemplarily illustrates the arrangement of the carrier generator and mixer **105,** the SCMFCAS **106,** the selector **107,** the post correlation unit **108** with the final stage adders and subtractors **108a,** the coherent accumulator **108b,** and the non-coherent accumulator **108c,** and the peak detector **109** in the satellite signal acquisition module **104,** which function as disclosed in the detailed description of FIG. **1.** Each of the **P** signal generators **115, 123,** and **124** of the SCMFCAS **106** comprises a primary mixer **116,** a single local carrier generator (LCG) **117,** a phase to amplitude converter (PAC) **118,** a single pseudo random noise code generator **120,** a linear feedback shift register **121,** and Q mixed frequency correlators **122a, 122b,..., to 122q,** where Q is a positive integer.

The primary mixer **116** is a complex mixer, for example, a complex intermediate frequency (IF) mixer. The primary mixer **116** receives N samples of IF data represented as (a, b) at a sampling rate $f_s$ from the radio frequency (RF) down converter **101** and generates inphase components and quadrature phase components of the received N samples of the IF data by mixing the received N samples of the IF data with a carrier reference signal locally generated by the local carrier generator **117.** The inphase components of the received N samples of the IF data refer to components that are offset in phase by a zero cycle. The quadrature phase components of the received N samples of the IF data refer to components that are offset in phase by a one-quarter cycle. The N samples of the IF data correspond to a GNSS signal received by the RF down converter **101.** The N samples of the IF data comprise complex IF data or real IF data. The single local carrier generator **117,** for example, a numerically controlled oscillator (NCO) is implemented in series with the phase to amplitude converter **118** to generate the locally generated carrier reference signal ($\Delta F_s$) of a numerically controlled oscillator frequency ($f_{NCO}$). The primary mixer **116** of the signal generator **115** mixes the received N samples of the IF data with the locally generated carrier reference signal for generating the inphase components and the quadrature phase components of the received N samples of the IF data. The generated inphase components and the generated quadrature phase components of the received N samples of the IF data are transmitted to each of the Q mixed frequency correlators **122a, 122b,..., to 122q.** Similarly, the inphase components and the quadrature phase components of the received N samples of the IF data generated by the primary mixer **116** of each of the other signal generators **123** and **124** are transmitted to each of the Q mixed frequency correlators **122a, 122b,..., to 122q** of each of the other signal generators **123** and **124.**

Consider an example where N samples of complex intermediate frequency (IF) data (a, b) having a sampling rate $f_s$ are mixed with a complex carrier reference signal (c, d) of $f_{NCO}$ using the primary mixer **116** to generate inphase components (ac, bd) and quadrature phase components (bc, ad). The $f_{NCO}$ can be much lesser than that of the $f_s$, thereby saving switching power of the single local carrier generator **117.** The generated inphase components comprise a first inphase component (ac) and a second inphase component (bd). The generated quadrature phase components comprise a first quadrature phase component (bc) and a second quadrature phase component (ad). The operation of the sequential chip mixed frequency correlator array system (SCMFCA) **106** in the above example is described for a complex IF data input. In case of a real IF data input, the real IF data is converted into a complex IF data in the carrier frequency offset module **103,** before transmission to the SCMFCAS **106.** For example, real IF data is converted into complex IF data using the carrier frequency offset module

integer.

**103,** and the inphase output and the quadrature phase output of the carrier frequency offset module **103** form the complex IF data for the SCMFCAS **106.**

The single pseudo random noise (PRN) code generator **120** generates a PRN code bit sequence. The generated PRN code bit sequence corresponds to the global navigation satellite system (GNSS) signal received by the radio frequency (RF) down converter **101.** A code numerically controlled oscillator (NCO) **119** is operably connected to the single PRN code generator **120** for generating the PRN code bit sequence corresponding to the received GNSS signal. For example, the code NCO **119** connected in series with the single PRN code generator **120** and the phase to amplitude converter **118** generates a coarse/acquisition (C/A) code replica sequence if the received GNSS signal is a global positioning system (GPS) satellite signal. Each of the Q mixed frequency correlators **122a, 122b,...,** to **122q** is operably connected to the primary mixer **116** and to the single PRN code generator **120** via a linear feedback shift register (LFSR) **121.** The LFSR **121** is programmed such that the generated PRN code bit sequence is delayed for a predetermined time before transmitting the generated PRN code bit sequence to the subsequent mixed frequency correlators, for example, **122b,...,** to **122q.**

Each of the Q mixed frequency correlators **122a, 122b,...,** to **122q** in the signal generator **115** generates inphase accumulated correlation components and quadrature phase accumulated correlation components by processing the generated inphase components and the generated quadrature phase components of the N samples of the intermediate frequency (IF) data transmitted by the primary mixer **116** as disclosed in the detailed description of FIG. **3.** Similarly, each of the Q mixed frequency correlators **122a, 122b,...,** to **122q** in the other signal generators **123** and **124** generates inphase accumulated correlation components and quadrature phase accumulated correlation components by processing the inphase components and the quadrature phase components of the N samples of the IF data transmitted by the primary mixer **116** of each of the other signal generators **123** and **124.**

The sequential chip mixed frequency correlator array system (SCMFCAS) **106** transmits the inphase accumulated correlation components and the quadrature phase accumulated correlation components generated by each of the Q mixed frequency correlators **122a, 122b,...,** to **122q** from each of the P signal generators **115, 123,** and **124** to the post correlation unit **108** using the selector **107** for processing as disclosed in the detailed description of FIG. **3.** All the Q mixed frequency correlators **122a, 122b,...,** to **122q** in the signal generator **115** employ a single local carrier generator **117** and a single pseudo random noise (PRN) code generator **120** to generate the inphase accumulated correlation components and the quadrature phase accumulated correlation components of the N samples of the IF data as compared to a standard correlator which requires a local carrier generator and a PRN code generator per correlator. Similarly, all the Q mixed frequency correlators **122a, 122b,...,** to **122q** in each of the other signal generators **123** and **124** employs only a single local carrier generator **117** and a single PRN code generator **120** to generate the inphase accumulated correlation components and the quadrature phase accumulated correlation components of the N samples of the IF data. This reduction in the number of the local carrier generators **117** and the PRN code generators **120** reduces the power consumption of the SCMFCAS **106,** thereby reducing the total power consumption of the global navigation satellite system (GNSS) receiver **100.**

The global navigation satellite system (GNSS) receiver **100** further comprises a feedback module **126** for providing feedback to the satellite signal acquisition module **104** of the GNSS baseband engine **102** exemplarily illustrated in FIG. 1. The feedback module **126** comprises a sequential chip mixed frequency correlator array (SCMFCA) controller **126b** and a communication interface **126a.** The satellite signal acquisition module **104** is in operable communication with the coprocessor **114** via the communication interface **126a.** The communication interface **126a** is positioned between the SCMFCA controller **126b** and the coprocessor **114.** The SCMFCA controller **126b** receives correlator programming parameters comprising, for example, a code phase offset, a code frequency, a carrier frequency, and a code chip offset from the coprocessor **114** through the communication interface **126a** for programming the single local carrier generator **117** and the single pseudo random noise (PRN) code generator **120** of each of the P signal generators **115, 123,** and **124.** As used herein, "code phase offset" refers to an offset in a phase of the PRN code bit sequence generated by the PRN code generator **120.** Also, as used herein, "code frequency" refers to a frequency of the PRN code bit sequence that needs to be generated. Also, as used herein, "code chip offset" refers to an offset that indicates a particular bit in the PRN code bit sequence. Also, as used herein, "carrier frequency" refers to a frequency that needs to be searched. Similarly, each of the P signal generators **115, 123,** and **124** can be programmed with any combination of the correlator programming parameters. The correlator programming parameters are derived based on an acquisition search space and a predetermined strategy selected to search GNSS signals. For example, for acquiring global positioning system (GPS) L1 C/A signals, the entire search space comprising code phase offset = 0, code frequency = 1.023e6, code chip offset = 0 to M-1 for searching from a first code chip of the PRN code bit sequence, and carrier frequency = 250 Hz is searched. The SCMFCA controller **126b** also receives parameters for programming the selector **107** for selecting the inphase accumulated correlation components and the quadrature phase from one of the M mixed frequency correlators **125.** For example, the parameters for programming the selector **107** comprise an order in which the output of the M mixed frequency correlators **125** should be transmitted to the post correlation unit **108**.

FIG. **3** exemplarily illustrates components of one of the M mixed frequency correlators **125,** for example, a mixed frequency correlator **122a** of the signal generator **115** of the sequential chip mixed frequency correlator array system (SCMFCAS) **106** operably connected to the post correlation unit **108** of the satellite signal acquisition module **104** exemplarily illustrated in FIGS. **1-2.** M is a positive integer. M mixed frequency correlators **125** refer to the total number of mixed frequency correlators **125** in the SCMFCAS **106** as disclosed in detailed description of FIGS. **1-2.** Each of the M mixed frequency correlators **125** including the Q mixed frequency correlators **122a, 122b,...,** to **122q** of the **P** signal generators **115, 123,** and **124** exemplarily illustrated in FIG. **2,** comprises secondary mixers **127a, 127b, 127c,** and **127d,** and accumulator and dump units **128a, 128b, 128c,** and **128d** as exemplarily illustrated in FIG. **3.** The secondary mixers **127a, 127b, 127c,** and **127d** are simple code mixers. The secondary mixers **127a, 127b, 127c,** and **127d** are operably connected to the primary mixer **116** for generating discrete correlation components of the received N samples of the intermediate frequency **(IF)** data by individually mixing the generated inphase components and the generated quadrature phase components of the received N samples of the IF data with the pseudo random noise (PRN) code bit sequence. As used herein, "discrete correlation components" refer to components that quantify how closely the generated inphase components, the quadrature phase components, and the PRN code bit sequence match with the carrier and PRN code sequence in the received N samples of the IF data.

In the example disclosed in the detailed description of FIG. **2,** the inphase components (ac, bd) and the quadrature phase components (bc, ad) outputted by the primary mixer **116** are mixed with a pseudo random noise (PRN) code bit sequence using the secondary mixers **127a, 127b, 127c,** and **127d** to generate the discrete correlation components (ac*p, bd*p, bc*p, and ad*p), where p is equal to a code bit in the full PRN code bit sequence at a given instant of time. The secondary mixer **127a** generates a first inphase discrete correlation component (ac*p) by mixing the first inphase component (ac) transmitted by the primary mixer **116** with the generated PRN code bit sequence. The secondary mixer **127b** generates a second inphase discrete correlation component (bd*p) by mixing the second inphase component (bd) transmitted by the primary mixer **116** with the generated PRN code bit sequence. The secondary mixer **127c** generates a first quadrature phase discrete correlation component (bc*p) by mixing the first quadrature phase component (bc) transmitted by the primary mixer **116** with the generated PRN code bit sequence. The secondary mixer **127d** generates a second quadrature phase discrete correlation component (ad*p) by mixing the second quadrature phase component (ad) transmitted by the primary mixer **116** with the generated PRN code bit sequence.

The accumulator and dump units **128a, 128b, 128c,** and **128d** are electronic registers that store data. The accumulator and dump units **128a, 128b, 128c,** and **128d** are operably connected to the corresponding secondary mixers **127a, 127b, 127c,** and **127d** respectively, for generating accumulated correlation components of the received N samples of the intermediate frequency (IF) data by coherently accumulating and dumping the generated discrete correlation components of the received N samples of the IF data. The accumulated correlation components are values generated by the accumulator and dump units **128a, 128b, 128c,** and **128d** by coherently accumulating the discrete correlation components of each of the N samples of the IF data over a predetermined duration. The accumulator and dump unit **128a** generates a first inphase accumulated correlation component ($I_1$) by coherently accumulating the first inphase discrete correlation component of each of the N samples of the IF data transmitted by the secondary mixer **127a.** The accumulator and dump unit **128b** generates a second inphase accumulated correlation component ($I_2$) by coherently accumulating the second inphase discrete correlation component of each of the N samples of the IF data transmitted by the secondary mixer **127b.** The accumulator and dump unit **128c** generates a first quadrature phase accumulated correlation component ($Q_1$) by coherently accumulating the first quadrature phase discrete correlation component of each of the N samples of the IF data transmitted by the secondary mixer **127c.** The accumulator and dump unit **128d** generates a second quadrature phase accumulated correlation component ($Q_2$) by coherently accumulating the second quadrature phase discrete correlation component of each of the N samples of the IF data transmitted by the secondary mixer **127d.** The accumulator and dump units **128a, 128b, 128c,** and **128d** sequentially accumulate the outputs generated by the secondary mixers **127a, 127b, 127c,** and **127d** respectively, over a time duration equal to a total time period of the N samples of the IF data. In the above example, the accumulation and dump units **128a, 128b, 128c,** and **128d** therefore accumulate the discrete correlation components (ac*p, bd*p, bc*p, and ad*p) generated by the secondary mixers **127a, 127b, 127c,** and **127d** respectively, for generating inphase accumulated correlation components ($I_1$ and $I_2$) and quadrature phase accumulated correlation components ($Q_1$ and $Q_2$) of the N samples of the IF data as disclosed below, where "p" is a PRN code bit at the time of mixing the inphase components (ac, bd) and the quadrature phase components (bc, ad) with the PRN code bit sequence.

$$I_1 = \sum_{k=1}^{N} ac_k * p_k$$

$$I_2 = \sum_{k=1}^{N} bd_k * p_k$$

$$Q_1 = \sum_{k=1}^{N} bc_k * p_k$$

$$Q_2 = \sum_{k=1}^{N} ad_k * p_k$$

The mixed frequency correlator **122a** along with the other of the M mixed frequency correlators **125** of the sequential chip mixed frequency correlator array system (SCMFCAS) **106** exemplarily illustrated in FIG. **2,** are operably connected to the post correlation unit **108** comprising the final stage adders and subtractors **108a,** the coherent accumulator **108b,** and the non-coherent accumulator **108c** via the selector **107.** The final stage adders and subtractors **108a** are operably connected to the SCMFCAS **106** and time division multiplexed for sequentially generating correlation values for a positive frequency and a negative frequency of the received N samples of the intermediate frequency (IF) data by combining the accumulated correlation components of each of the Q mixed frequency correlators **122a, 122b,..., to 122q** from each of the P signal generators **115, 123,** and **124.** In an embodiment, the architecture of the satellite signal acquisition module **104** exemplarily illustrated in FIGS. **2-3,** facilitates time division multiplexing of the final stage adders and subtractors **108a** required for generating correlation values that correspond to positive and negative local carrier signals. The final stage adders and subtractors **108a** sequentially generate the correlation values by addition and/or subtraction of the inphase accumulated correlation components and the quadrature phase accumulated correlation components of the N samples of the IF data of each of the Q mixed frequency correlators **122a, 122b,..., to 122q** from each of the P signal generators **115, 123,** and **124.** The accumulated correlation components of the accumulator and dump units **128a, 128b, 128c,** and **128d** are transmitted to the final stage adders and subtractors **108a** using the selector **107.** The selector **107** is, for example, a multiplexer programmed for selecting and transmitting one set of the inphase accumulated correlation components and the quadrature phase accumulated correlation components generated by one of the M mixed frequency correlators **125,** for example, the mixed frequency correlator **122a** of the signal generator **115** of the SCMFCAS **106** to the final stage adders and subtractors **108a** of the post correlation unit **108.**

The selector **107** is programmed such that the final stage adders and subtractors **108a** appear on a common signal path only a fraction of time in a predetermined pattern. The predetermined pattern of switching the final stage adders and subtractors **108a** at the end of the common signal path using the selector **107** is known as time division multiplexing of the final stage adders and subtractors **108a.** Time division multiplexing of the final stage adders and subtractors **108a** after the accumulation and the dumping of the generated discrete correlation components of the received N samples of the intermediate frequency (IF) data, and generation of the correlation values for the positive frequency and the negative frequency of the received N samples of the IF data using the accumulated correlation components of each of the Q mixed frequency correlators **122a, 122b,..., to 122q** from each of the P signal generators **115, 123,** and **124** reduce logic area of the sequential chip mixed frequency correlator array system (SCMFCAS) **106** in the global navigation satellite system (GNSS) baseband engine **102,** thereby reducing power consumption of the GNSS receiver **100** exemplarily illustrated in FIG. **1.** For example, a typical GNSS receiver with M mixed frequency correlators employs M post correlation units to process the outputs from the M mixed frequency correlators, whereas the GNSS receiver **100** disclosed herein employing the SCMFCAS **106** uses only a single post correlation unit **108** to process the outputs from all the M mixed frequency correlators **125** of the SCMFCAS **106,** thereby providing a reduction of (M-1) post correlation units and eliminating leakage power from each of the (M-1) post correlation units. The magnitude of reduction in logic area and power consumption of the SCMFCAS **106** is directly proportional to M, that is, to the total number of mixed frequency correlators 125 in the SCMFCAS **106.** The logic area is reduced due to the reduction in the number of mixed frequency correlators **125** required in the SCMFCAS **106.** In an example where 160,000 bins are to be searched, the total number of mixed frequency correlators **125** required by the SCMFCAS **106** to search the GNSS signal over the 160,000 bins is 80,000 as compared to 160,000 correlators required in the case of a conventional, standard correlator system. Therefore, the satellite signal acquisition module **104** in the SCMFCAS **106** disclosed herein saves nearly 50% of logic area and power consumed when compared with that of a conventional, standard correlator based satellite signal acquisition module.

The time division multiplexed final stage adders and subtractors **108a** combine the inphase accumulated correlation components and the quadrature phase accumulated correlation components of the N samples of the intermediate frequency (IF) data received from the accumulator and dump units **128a, 128b, 128c,** and **128d** of the mixed frequency correlators **122a, 122b,..., to 122q** in the signal generator **115** in a predetermined pattern to generate the correlation values for the positive frequency and the negative frequency of the N samples of the IF data of the received GNSS signal. In the above example, the accumulation and dump units **128a, 128b, 128c,** and **128d** transmit the generated inphase accumulated cor-

relation components ($I_1$, $I_2$) and the quadrature phase accumulated correlation components ($Q_1$, $Q_2$) of the N samples of the IF data to the time division multiplexed final stage adders and subtractors **108a** to generate an inphase correlation value ($I_f$) and a quadrature phase correlation value ($Q_f$) for the positive frequency, that is, ($I_{+f}$ = $I_1$ - $I_2$ and $Q_{+f}$ = $Q_1$+ $Q_2$) respectively, herein referred to as "positive frequency correlation values", and to generate an inphase correlation value ($I_f$) and a quadrature phase correlation value ($Q_f$) for the negative frequency, that is, ($L_f$ = $I_1$+$I_2$ and $Q_{-f}$ = $Q_1$-$Q_2$) respectively, herein referred to as "negative frequency correlation values", of the N samples of the IF data.

Time division multiplexing the final stage adders and subtractors **108a** across the M mixed frequency correlators **125** of the sequential chip mixed frequency correlator array system (SCMFCAS) **106** reduces the number of mixed frequency correlators **125** required by the SCMFCAS **106,** for example, by 50% as compared to the number of correlators required in a conventional, standard correlator to generate the correlation values of the positive frequency and the negative frequency of the N samples of the intermediate frequency data. This reduction in the number of the mixed frequency correlators **125** in the SCMFCAS **106** considerably reduces the power consumed by the global navigation satellite system (GNSS) baseband engine **102,** thereby reducing the power consumption of the GNSS receiver **100.** For example, a GNSS receiver employing a conventional, standard correlator consumes 100 milliwatts (mW) of power during an acquisition process, whereas the GNSS receiver **100** employing the SCMFCAS **106** disclosed herein consumes about 50 mW of power for the acquisition process. The SCMFCAS **106** achieves the same time to first fix as compared to the conventional, standard correlator, to generate the correlation values of both the positive frequency and the negative frequency of the received GNSS signal.

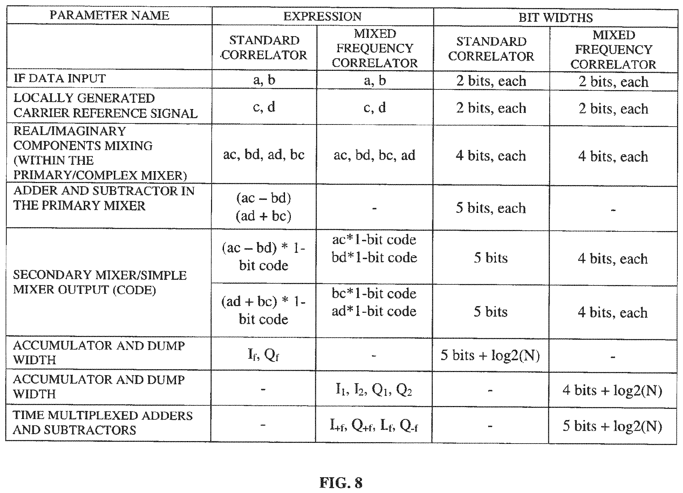

Bit width of the discrete correlation components generated by the secondary mixers **127a, 127b, 127c,** and **127d** and the accumulated correlation components generated by the accumulator and dump units **128a, 128b, 128c,** and **128d** of one of the M mixed frequency correlators **125,** for example, the mixed frequency correlator **122a** is one bit smaller compared to that of the conventional, standard correlator. The reduction in bit width further reduces the logic area and the power consumption of the M mixed frequency correlators **125** of the sequential chip mixed frequency correlator array system (SCMFCAS) **106,** thereby further reducing the power consumption of the global navigation satellite system (GNSS) baseband engine **102** and the GNSS receiver **100.** For example, the SCMFCAS **106** saves 8 bits in total per mixed frequency correlator compared to the conventional, standard correlator. Therefore, total bits saved by the M mixed frequency correlators **125** in the SCMFCAS **106** is equal to 8 * M bits. The bit widths for parameters at different stages of the correlation in the conventional, standard correlator and one of the M mixed frequency correlators **125** of the SCMFCAS **106** is disclosed in the detailed description of FIG. **8.**

The coherent accumulator **108b** of the post correlation unit **108** is operably connected to the final stage adders and subtractors **108a** as exemplarily illustrated in FIG. 3. The coherent accumulator **108b** generates coherent integration values corresponding to the positive frequency and the negative frequency of the received N samples of the intermediate frequency (IF) data by performing programmable coherent integration of the positive frequency correlation values and the negative frequency correlation values of the received N samples of the IF data over a predetermined duration of time. As used herein, "programmable coherent integration" refers to accumulation of the positive frequency correlation values and the negative frequency correlation values of the N samples of the IF data over a predetermined duration of time programmed by the coprocessor **114** exemplarily illustrated in FIGS. **1-2.** The coherent accumulator **108b** performs coherent integration of the positive frequency correlation values and the negative frequency correlation values sequentially generated by the final stage adders and subtractors **108a** by combining the accumulated correlation components of each of the Q mixed frequency correlators **122a, 122b,..., to 122q** from each of the P signal generators **115, 123,** and **124.** The final stage adders and subtractors **108a** sequentially transmit the sequentially generated positive frequency correlation values and negative frequency correlation values to the coherent accumulator **108b** for coherent integration. In the above example, the final stage adders and subtractors **108a** transmit the positive frequency correlation values ($I_{+f}$, $Q_{+f}$) and the negative frequency correlation values ($I_{-f}$, $Q_{-f}$) of the N samples of the IF data to the coherent accumulator **108b.** The coherent accumulator **108b** generates positive coherent integration values ($I_{+fc}$ and $Q_{+fc}$) and negative coherent integration values ($I_{-fc}$ and $Q_{-fc}$) as disclosed below, by performing coherent integration of the positive frequency correlation values ($I_{+f}$, $Q_{+f}$) and the negative frequency correlation values ($I_{-f}$, $Q_{-f}$) respectively.

$$I_{+fc} = \sum_{k=1}^{t} I_{+fk}$$

$$Q_{+fc} = \sum_{k=1}^{t} Q_{+fk}$$

$$I_{-fc} = \sum_{k=1}^{t} I_{-fk}$$

$$Q_{-fc} = \sum_{k=1}^{t} Q_{-fk}$$

The coprocessor **114** controls the period of programmable coherent integration based on signal sensitivity. The coherent integration values represent multiples of the N samples of the intermediate frequency (IF) data. For example, if the programmed duration of time for coherent integration is "t", then the coherent accumulator **108b** accumulates the positive frequency correlation values and the negative frequency correlation values "t" times. Therefore, the total number of IF data samples that are coherently accumulated will be t * N samples of the IF data.

The non-coherent accumulator **108c** is operably connected to the coherent accumulator **108b** and receives the coherent integration values ($I_{+fc}$, $Q_{+fc}$, $I_{-fc}$, and $Q_{-fc}$) corresponding to the positive frequency and the negative frequency of the received N samples of the intermediate frequency (IF) data from the coherent accumulator **108b**. The non-coherent accumulator **108c** generates non-coherent integration values corresponding to the positive frequency and the negative frequency of the received N samples of the IF data by performing programmable non-coherent integration across the coherent integration values. As used herein, "programmable non-coherent integration" refers to detecting envelope values of the positive frequency coherent integration values and the negative frequency coherent integration values of the t*N samples of the IF data, and accumulating the envelope values over a predetermined duration of time programmed by the coprocessor **114.**

In the above example, the coherent accumulator **108b** transmits the generated coherent integration values ($I_{+fc1}$, $Q_{+fc1}$, $I_{fc1,}$ and $Q_{-fc1}$) at time t0 and transmits the generated coherent integration values ($I_{+fc2}$, $Q_{+fc2}$, $I_{-fc2}$, and $Q_{-fc2}$) at time t1 = t0 + T, where T is a coherent integration period, to the non-coherent accumulator **108c**. The non-coherent accumulator **108c** then generates the non-coherent integration values, namely,

$$(V_{+f} = \sqrt{I_{+fc1}^2 + Q_{+fc1}^2} + \sqrt{I_{+fc2}^2 + Q_{+fc2}^2})$$ and

$$(V_{-f} = \sqrt{I_{-fc1}^2 + Q_{-fc1}^2} + \sqrt{I_{-fc2}^2 + Q_{-fc2}^2})$$ corresponding to

the positive frequency and the negative frequency of the received N samples of the intermediate frequency (IF) data respectively, by performing programmable non-coherent integration across the coherent integration values over the two time intervals t0 and t1 of the coherent integration period. Similarly, the non-coherent accumulator **108c** performs non-coherent integration over many coherent integration values. The non-coherent accumulator **108c** performs non-coherent integration of the coherent integration values sequentially generated and transmitted by the coherent accumulator **108b**. The peak detector **109** operably connected to the non-coherent accumulator **108c** of the post correlation unit **108** performs acquisition checks on the generated non-coherent integration values that correspond to the positive frequency and the negative frequency of the received N samples of the IF data against a predefined threshold value or a dynamically computed threshold value. If the non-coherent integration values exceed the threshold value, then the global navigation satellite system (GNSS) signal is declared to be acquired. Otherwise, the GNSS signal is not acquired.

The global navigation satellite system (GNSS) receiver **100** comprising the sequential chip mixed frequency correlator array system (SCMFCAS) **106** disclosed herein provides an improvement in satellite receiver technology as follows: On implementing the GNSS receiver **100** disclosed herein using the GNSS baseband engine **102** employing the SCMFCAS **106,** each of the M mixed frequency correlators **125** of the SCMFCAS **106** computes the accumulated correlation components for a positive frequency and a negative frequency of a single GNSS signal. The time multiplexed final stage adders and subtractors **108a** compute the correlation values of the positive frequency and the negative frequency of the single GNSS signal by combining the accumulated correlation components. The number of the mixed frequency correlators **125** required by the SCMFCAS **106** is less compared to a conventional, standard correlator. This reduction in the number of the mixed frequency correlators **125** in the SCMFCAS **106** and the reduction in bit width disclosed above reduce the logic area of the SCMFCAS **106,** thereby reducing the power consumption of the GNSS baseband engine **102** and thus reducing the power consumption of the GNSS receiver **100**. The SCMFCAS **106** further achieves the same time to first fix as compared to the conventional, standard correlator with a small number of correlators. Furthermore, each of the P signal generators **115, 123,** and **124** of the SCMFCAS **106** disclosed herein is implemented with a single local carrier generator **117** and a single pseudo random noise code generator **120** corresponding to either a positive frequency or a negative frequency of the received N samples of the intermediate frequency (IF) data to obtain the correlation values that correspond to the positive frequency and the negative frequency of the received N samples of the IF data.

FIG. **4** exemplarily illustrates an embodiment, showing the carrier frequency offset module **103** deployed in the global navigation satellite system (GNSS) baseband engine **102** for offsetting carrier frequency of N samples of intermediate frequency (IF) data. The carrier frequency offset module **103** is operably connected to the radio frequency down converter **101** and the sequential chip mixed frequency correlator array system (SCMFCAS) **106** in the GNSS baseband engine **102** as exemplarily illustrated in FIG. **1**. The SCMFCAS **106** is exemplarily represented as a bank of M mixed frequency correlators in FIG. **4**. In addition to the power reduction achieved by using the SCMFCAS **106** in the satellite signal acquisition module **104** exemplarily illustrated in FIG. **1,** the implementation of the carrier frequency offset module **103** further reduces the power consumption during generation of the carrier reference signal. This implementation is also applicable to the tracking module **110** comprising tracking channels as exemplarily illustrated in FIG. **4.**

The carrier frequency offset module **103** comprises an auxiliary local carrier generator **103a** and an auxiliary mixer **103b**. The auxiliary local carrier generator **103a** is common to the satellite signal acquisition module **104,** and therefore common to all the M mixed frequency correlators **125** of the sequential chip mixed frequency correlator array system (SCMFCAS) **106** exemplarily illustrated in FIG. **2**. The auxiliary local carrier generator **103a** generates an offsetting carrier reference signal. As used herein, "offsetting carrier reference signal" refers to a negative intermediate frequency (IF) signal used to offset carrier frequency of the N samples of the IF data received from the radio frequency (RF) down converter **101** of the GNSS receiver **100** exemplarily illustrated in FIG. **1**. The auxiliary local carrier generator **103a** operates at a sampling rate $f_s$ to offset the carrier frequency of the N samples of the IF data to zero. The auxiliary mixer **103b** is a complex mixer operably connected to the auxiliary local carrier generator **103a** and the RF down converter **101** for offsetting the carrier frequency of the N samples of the IF data to zero by mixing the N samples of the IF data with the offsetting carrier reference signal, for further reducing the power consumption of the GNSS receiver **100.**

The carrier frequency offset module **103** brings the carrier frequency of the N samples of the intermediate frequency (IF) data to zero or near zero by mixing the N samples of the IF data with the offsetting carrier reference signal having a frequency equal to the IF locally generated by the auxiliary local carrier generator **103a,** before passing the N samples of the IF data to the satellite signal acquisition module **104** and the tracking module **110** in the global navigation satellite system (GNSS) baseband engine **102.** In this implementation, the single local carrier generator **117** in each of the P signal generators **115, 123,** and **124** of the sequential chip mixed frequency correlator array system (SCMFCAS) **106** exemplarily illustrated in FIG. **2,** operates at a frequency greater than twice the maximum Doppler frequency supported by the GNSS receiver **100,** thereby precluding operation of the single local carrier generator **117** at the sampling rate $f_s$ within the SCMFCAS **106,** and further reducing the power consumption of the GNSS receiver **100.** The frequency of operation of the single local carrier generator **117** is selected using a Nyquist criterion. The Nyquist criterion is a standard for signal sampling and generation employed in GNSS receivers.

In an example, for commercial applications, the maximum Doppler frequency is typically less than 10 KHz. By using the Nyquist criterion, it is sufficient if the single local carrier generator **117** operates at frequencies slightly greater than 20 KHz, for example, at the numerically controlled oscillator frequency ($f_{NCO}$). Therefore, the single local carrier generator **117** does not need to run at the sampling rate within the sequential chip mixed frequency correlator array system (SCMFCAS) **106** or the tracking channels. Operating the local carrier generator **117** of each of the P signal generators **115, 123,** and **124** at the frequency $f_{NCO}$ that is lower than the sampling rate $f_s$ of the N samples of the intermediate frequency (IF) data reduces the power consumption of the SCMFCAS **106** by a factor of $f_s/f_{NCO}$. For example, operating the single local carrier generator **117** of each of the P signal generators **115, 123,** and **124** at the frequency $f_{NCO}$ reduces the power consumption of the SCMFCAS **106** by a factor of ($P * f_s/f_{NCO}$), compared to operating the local carrier generators **117** at $f_s$. For example, if the sampling frequency is 16 MHz and $f_{NCO}$ is 40 KHz, then the operating power or power consumed by the single local carrier generator **117** is reduced by a significant factor of 16 MHz/40 KHz = 400. This implementation therefore generates the carrier reference signal by running the single local carrier generator **117** at frequencies less than that of the IF sampling frequency, that is, slightly above the Nyquist sampling frequency to save power. In this implementation, the cost of running the single local carrier generators **117** of all the P signal generators **115, 123,** and **124** of the SCMFCAS **106** at $f_{NCO}$ is less than or the same as the cost of running one single local carrier generator **117** at $f_s$.

The power consumed by a logic circuit of the single local carrier generator **117** is given by the expression $P = C*V^2*p*f$, where "P" indicates dynamic power, "C" indicates load capacitance, "p" indicates probability of an output transition, and "f" indicates operating frequency. The expression $P = C*V^2*p*f$ illustrates that the dynamic power is proportional to the frequency of operation. Thus, reducing the frequency of operation of the **P** signal generators **115, 123,** and **124** reduces the dynamic power of the sequential chip mixed frequency correlator array system (SCMFCAS) **106,** thereby reducing the power consumption of the global navigation satellite system (GNSS) receiver **100.**

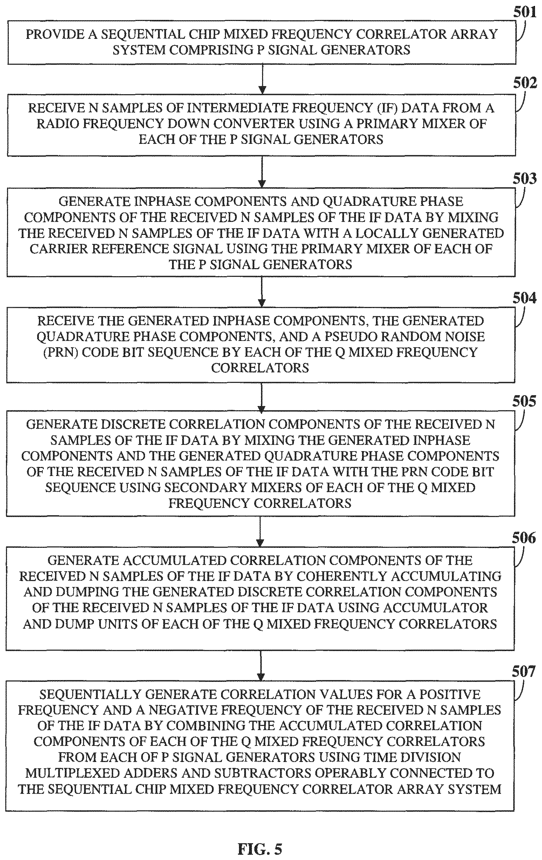

FIG. **5** illustrates a method for generating correlation values for a positive frequency and a negative frequency of a single global navigation satellite system (GNSS) signal received by the radio frequency (RF) down converter **101** of the GNSS receiver **100** exemplarily illustrated in FIG. **1**. In the method disclosed herein, the sequential chip mixed frequency correlator array system (SCMFCAS) **106** comprising P signal generators **115, 123,** and **124** deployed in the GNSS baseband engine **102** exemplarily illustrated in FIGS. **1-2,** is provided **501**. Each of the **P** signal generators **115, 123,** and **124** comprises the single local carrier generator **117,** the primary mixer **116,** the single pseudo random noise (PRN) code generator **120,** the linear feedback shift register (LFSR) **121** operably connected to the single PRN code generator **120,** and Q mixed frequency correlators **122a, 122b,...,** to **122q** operably connected to the primary mixer **116** and the LFSR **121** as exemplarily illustrated in FIGS. **2-3.** The components of each of the P signal generators **115, 123,** and **124** of the SCMFCAS **106** function as follows: The primary mixer **116** receives **502** N samples of intermediate frequency (IF) data corresponding to the GNSS signal from the RF down converter **101** as disclosed in the detailed description of FIG. **2.** The primary mixer **116** generates **503** inphase components and quadrature phase components of the received N samples of the IF data by mixing the received N samples of the IF data with a carrier reference signal locally generated by the single local carrier generator **117.** Each of the Q mixed frequency correlators **122a, 122b,...,** to **122q** receives **504** the generated inphase components, the generated quadrature phase components, and a PRN code bit sequence corresponding to the GNSS signal, generated by the single PRN code generator **120.**

Each of the Q mixed frequency correlators **122a, 122b,...,** to **122q** comprises secondary mixers **127a, 127b, 127c,** and **127d** operably connected to the primary mixer **116,** and accumulator and dump units **128a, 128b, 128c,** and **128d** operably connected to the corresponding secondary mixers **127a, 127b, 127c,** and **127d** respectively, as exemplarily illustrated in FIG. **3.** The secondary mixers **127a, 127b, 127c,** and **127d** generate **505** discrete correlation components of the received N samples of the intermediate frequency (IF) data by mixing the generated inphase components and the generated quadrature phase components of the received N samples of the IF data with the pseudo random noise (PRN) code bit sequence. The accumulator and dump units **128a, 128b, 128c,** and **128d** generate **506** accumulated correlation components of the received N samples of the IF data by coherently accumulating and dumping the generated discrete correlation components of the received N samples of the IF data. The time division multiplexed adders and subtractors **108a** operably connected to the sequential chip mixed frequency correlator array system (SCMFCAS) **106** exemplarily illustrated in FIGS. **2-3,** sequentially generate **507** correlation values for a positive frequency and a negative frequency of the received N samples of the IF data by combining the accumulated correlation components of each of the Q mixed frequency correlators **122a, 122b,...,** to **122q** from each of the P signal generators **115, 123,** and **124.** Time division multiplexing of the final stage adders and subtractors **108a** after the accumulation and the dumping of the generated discrete correlation components of the received N samples of the IF data, and the generation of the correlation values for the positive frequency and the negative frequency of the received N samples of the IF data using the accumulated correlation components of each of the Q mixed frequency correlators **122a, 122b,...,** to **122q** from each of the **P** signal generators **115, 123,** and **124** reduce the logic area of the SCMFCAS **106** in the global navigation satellite system (GNSS) baseband engine **102,** thereby reducing power consumption of the GNSS receiver **100.**

In an embodiment, the carrier frequency offset module **103** operably connected to the radio frequency down converter **101** and the sequential chip mixed frequency correlator array system (SCMFCAS) **106** exemplarily illustrated in FIG. **1** and FIG. **4,** and operating at a sampling rate, offsets the carrier frequency of the N samples of the intermediate frequency (IF) data to zero by mixing the N samples of the IF data with an offsetting carrier reference signal for further reducing the power consumption of the global navigation satellite system (GNSS) receiver **100** as disclosed in the detailed description of FIG. **4.** Post correlation functions comprising coherent integration performed by the coherent accumulator **108b** and non-coherent integration performed by the non-coherent accumulator **108c** exemplarily illustrated in FIGS. **1-3,** and acquisition checks performed by the peak detector **109** exemplarily illustrated in FIG. **2,** are disclosed in the detailed description of FIGS. **2-3.** The method disclosed herein is applicable to all the global navigation satellite system (GNSS) constellations and also applicable to all GNSS receivers.

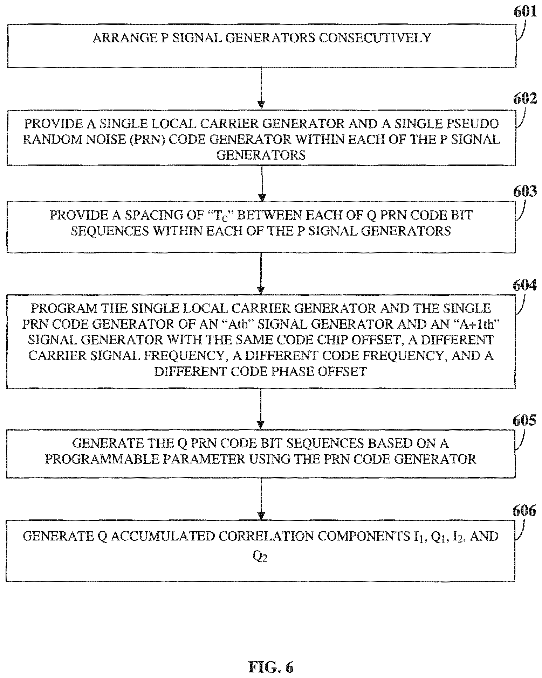

FIG. **6** exemplarily illustrates a method for setting up the sequential chip mixed frequency correlator array system (SCMFCAS) **106** exemplarily illustrated in FIG. **2,** for generating accumulated correlation components of N samples of intermediate frequency (IF) data. In the method disclosed herein, P signal generators **115, 123,** and **124** are arranged **601** consecutively in the SCMFCAS **106** as exemplarily illustrated in FIG. 2. A single local carrier generator **117** and a single pseudo random noise code (PRN) generator **120** exemplarily illustrated in FIGS. **2-3,** are provided **602** within each of the P signal generators **115, 123,** and **124.** A spacing of "$T_C$" is provided **603** between each of Q PRN code bit sequences within each of the P signal generators **115, 123,** and **124.** As used herein, "$T_c$" refers to spacing between adjacent mixed frequency correlators, for example, **122a, 122b,...,** to **122q** of each of the P signal generators **115, 123,** and **124** exemplarily illustrated in FIG. **2,** that search different PRN code bits. For example, $T_c$ is 0.5 chips, that is, half of one code bit period, for global positioning system (GPS) L1 coarse/acquisition (C/A) signals.

The single local carrier generator **117** and the single pseudo random noise code (PRN) code generator **120** exemplarily illustrated in FIG. **2,** of an "$A^{th}$" signal generator and an "$A+1^{th}$" signal generator are programmed **604** with the same code chip offset, a different carrier signal frequency, a different code frequency, and a different code phase offset. For example, the mixed frequency correlators, for example, **122a, 122b,...,** to **122q** of each of the P signal generators **115, 123,** and **124** are programmed to search different code phases of the same code chip offset. The ability to program the code phase offset allows the programmability of the chip spacing $T_c$. The mixed frequency correlators, for example, **122a, 122b,...,** to **122q** of each of the P signal generators **115, 123,** and **124** are programmed to search for any code phase and code chip with any code frequency, and carrier with any frequency. Q PRN code bit sequences are generated **605** based on a programmable parameter, for example, a programmed code phase offset, a code chip offset, and a code frequency using the single PRN code generator **120**. Q accumulated correlation components $I_1$, $Q_1$, $I_2$, and $Q_2$ are then generated **606** as disclosed in the detailed description of FIG. **3**.

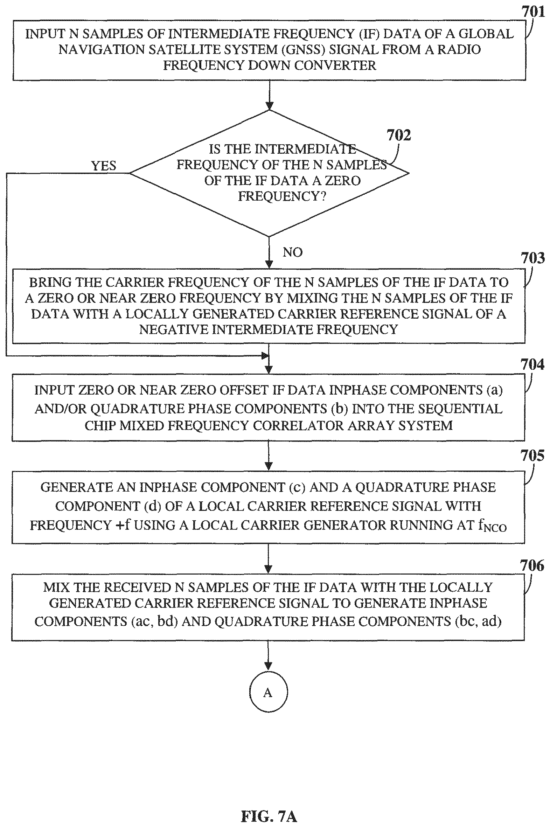

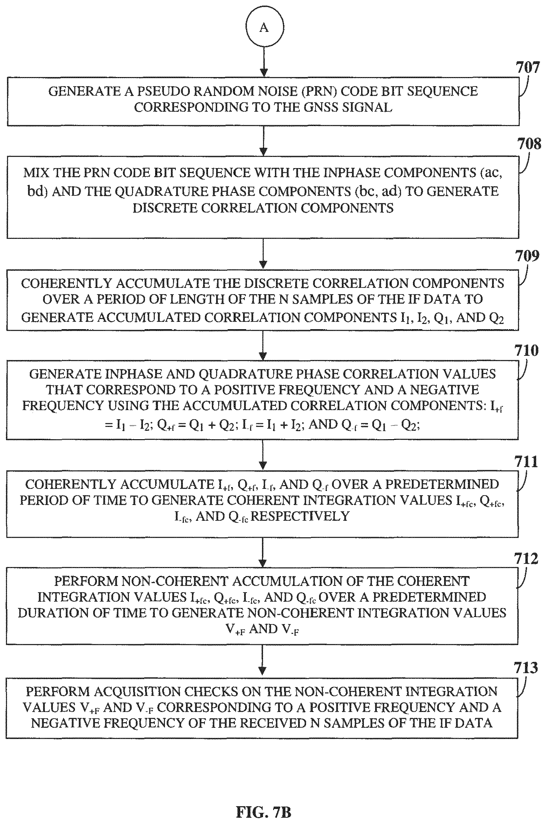

FIGS. **7A-7B** exemplarily illustrate a flowchart comprising the steps for generating correlation values for a positive frequency and a negative frequency of a single global navigation satellite system (GNSS) signal. The radio frequency down converter **101** of the GNSS receiver **100** exemplarily illustrated in FIG. **1,** inputs **701** N samples of intermediate frequency (IF) data of a GNSS signal into the GNSS baseband engine **102** exemplarily illustrated in FIG. **1**. A check **702** of whether the intermediate frequency of the N samples of the IF data is a zero frequency is performed in the GNSS baseband engine **102**. If the intermediate frequency of the N samples of the IF data is a non-zero frequency, the carrier frequency offset module **103** exemplarily illustrated in FIG. 1 and FIG. **4,** brings **703** the carrier frequency of the N samples of the IF data to a zero or near zero frequency by mixing the N samples of the IF data with a locally generated carrier reference signal of a negative intermediate frequency. The carrier frequency offset module **103** inputs **704** the zero or near zero offset IF data inphase components (a) and/or quadrature phase components (b) into the sequential chip mixed frequency correlator array system (SCMFCAS) **106** via the carrier generator and mixer **105** exemplarily illustrated in FIGS. **1-2**.

In each of the **P** signal generators **115, 123,** and **124** of the sequential chip mixed frequency correlator array system (SCMFCAS) **106** exemplarily illustrated in FIG. **2,** the local carrier generator **117,** that is, a numerically controlled oscillator (NCO) running at $f_{NCO}$, generates **705** an inphase component (c) and an quadrature phase component (d) of a local carrier reference signal with a frequency +f; the primary mixer **116** mixes **706** the received N samples of the intermediate frequency (IF) data with the locally generated carrier reference signal to generate inphase components (ac, bd) and quadrature phase components (bc, ad); the pseudo random noise (PRN) code generator **120** generates **707** a pseudo random noise (PRN) code bit sequence corresponding to the global navigation satellite system (GNSS) signal; and each of the Q mixed frequency correlators, for example, **122a, 122b,...,** to **122q** mixes **708** the PRN code bit sequence with the inphase components (ac, bd) and the quadrature phase components (bc, ad) to generate discrete correlation components and coherently accumulates **709** the discrete correlation components over a period of length of the N samples of the IF data to generate

accumulated correlation components $I_1$, $I_2$, $Q_1$, and $Q_2$.

The final stage adders and subtractors **108a** of the global navigation satellite system (GNSS) baseband engine **102** exemplarily illustrated in FIG. **2,** generate **710** inphase and quadrature phase correlation values that correspond to a positive frequency and a negative frequency, that is, $I_{+f} = I_1 - I_2$; $Q_{+f} = Q_1 + Q_2$; $L_f = I_1 + I_2$; and $Q_{-f} = Q_1 - Q_2$, using the accumulated correlation components $I_1$, $I_2$, $Q_1$, and $Q_2$; the coherent accumulator **108b** coherently accumulates **711** $I_{+f}$, $Q_{+f}$, $L_{-f}$, and $Q_{-f}$ over a predetermined period of time to generate coherent integration values $I_{+fc}$, $Q_{+fc}$, $I_{-fc}$, and $Q_{-fc}$ respectively; the non-coherent accumulator **108c** performs non-coherent accumulation **712** of the coherent integration values $I_{+fc}$, $Q_{+fc}$, $1_{-fc}$, and $Q_{-fc}$ over a predetermined duration of time to generate non-coherent integration values $V_{+F}$ and $V_{-F}$; and the peak detector **109** performs acquisition checks **713** on the non-coherent integration values $V_{+F}$ and $V_{-F}$ corresponding to the positive frequency and the negative frequency of the received N samples of the intermediate frequency (IF) data as disclosed in detailed description of FIG. 3. In the method disclosed herein, an acquisition search comprising a search for a particular frequency and a pseudo random noise (PRN) code delay is completed over two frequency bins +f and -f by locally generating a carrier with only one frequency. The method disclosed herein saves power by operating the single local carrier generator **117** at $f_{NCO}$. Each of the M mixed frequency correlators **125** of the sequential chip mixed frequency correlator array system (SCMFCAS) **106** obtains the correlation values that correspond to two frequency bins instead of having two separate correlators.

FIG. **8** exemplarily illustrates a comparison table representing bit widths for parameters at different stages of correlation in a standard correlator and in one of the M mixed frequency correlators **125** of the sequential chip mixed frequency correlator array system (SCMFCAS) **106** exemplarily illustrated in FIG. **2**. Consider an example where an intermediate frequency (IF) data input (a, b) having a bit width of two bits each, is mixed with a locally generated carrier reference signal (c, d) having a bit width of two bits each. A primary mixer in the standard correlator generates inphase components (ac, bd) and quadrature phase components (ad, bc) of 4 bits each. The primary mixer **116** in the signal generator **115** exemplarily illustrated in FIGS. **2-3,** generates inphase components (ac, bd) and quadrature phase components (bc, ad) of 4 bits each. An adder and a subtractor in the primary mixer of the standard correlator generate an inphase component (ac-bd) and a quadrature phase component (ad+bc) of 5 bits each. Secondary mixers operably connected to the primary mixer of the standard correlator generate an inphase correlation component and a quadrature phase correlation component of a bit width of 5 bits each by mixing the inphase component (ac-bd) and the quadrature phase component (ad+bc) with a pseudo random noise (PRN) code bit sequence generated by a PRN code generator. An accumulator and dump unit operably connected to the secondary mixers in the standard correlator generates correlation values $I_f$ and $Q_f$ having a bit width of 5 bits + log2(N) by accumulating N generated inphase correlation components and the generated quadrature phase correlation components output of the secondary mixers of the standard correlator, where N corresponds to the N samples of the input IF data.

The secondary mixers **127a, 127b, 127c,** and **127d** of the mixed frequency correlator **122a** exemplarily illustrated in FIG. **3,** generate inphase discrete correlation components and quadrature phase discrete correlation components of 4 bits each by mixing the inphase components (ac, bd) and the quadrature phase components (bc, ad) with the pseudo random noise (PRN) code bit sequence generated by the single PRN code generator **120** exemplarily illustrated in FIG. **3.** The accumulator and dump units **128a, 128b, 128c,** and **128d** of the mixed frequency correlator **122a** exemplarily illustrated in FIG. **3,** generate inphase accumulated correlation components ($I_1$, $I_2$) and quadrature phase accumulated correlation components ($Q_1$, $Q_2$) having a bit width of 4 bits + log2(N) each by coherently accumulating the output generated by the secondary mixers **127a, 127b, 127c,** and **127d**. The time multiplexed final stage adders and subtractors **108a** of the post correlation unit **108** exemplarily illustrated in FIG. **3,** generate correlation values $I_{+f}$ and $Q_{+f}$ having a bit width of 5 bits + log2(N) for a positive frequency and correlation values $I_{-f}$ and $Q_{-f}$ having a bit width of 5 bits + log2(N) bits for a negative frequency, where N corresponds to the N samples of the input IF data.

The outputs generated by the secondary mixers **127a, 127b, 127c,** and **127d** and the accumulator and dump units **128a, 128b, 128c**, and **128d** corresponding to the mixed frequency correlator **122a** are one bit less compared to the standard correlator. This reduction in bit width of the output of the secondary mixers **127a, 127b, 127c,** and **127d** of the mixed frequency correlator **122a** reduces the number of mixed frequency correlators **125** required by the sequential chip mixed frequency correlator array system (SCMFCAS) **106** to generate correlation values of the positive frequency and the negative frequency by 50% compared to the number of correlators required in the standard correlator to generate the correlation values of the positive frequency and the negative frequency of the N samples of the IF data. This reduction in the number of the mixed frequency correlators **125** in the SCMFCAS **106** considerably reduces the logic area and the power consumed by the global navigation satellite system (GNSS) baseband engine **102,** thereby reducing the power consumption of the GNSS receiver **100** exemplarily illustrated in FIG. **1,** as disclosed in the detailed description of FIG. **3.**

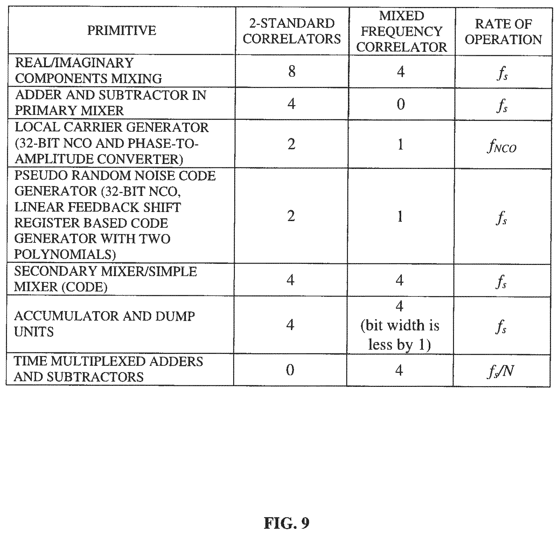

FIG. **9** exemplarily illustrates a comparison table representing resource comparison between two standard correlators and one of the M mixed frequency correlators **125,** for example, the mixed frequency correlator **122a** of the signal generator **115** of the sequential chip mixed frequency correlator array system (SCMFCAS) **106** exemplarily illustrated in FIGS. **2-3**. The comparison table exemplarily illustrated in FIG. **9,** shows that number of components, for example, the primary mixer **116,** the single local carrier generator **117,** the code numerically controlled oscillator (NCO) **119,** and the single pseudo random noise (PRN) code generator **120** used by the mixed frequency correlator **122a** exemplarily illustrated in FIGS. **2-3,** is equal to half the number of components used by the two standard correlators with respect to carrier generation, carrier mixing, and PRN code bit sequence generation. The mixed frequency correlator **122a** does not use an adder and a subtractor within the primary mixer **116** as compared to the standard correlators. Absence of the adder and the subtractor in the primary mixer **116** significantly saves logic area and power consumption of the mixed frequency correlator **122a** of the SCMFCAS **106,** thereby reducing the power consumption of the global navigation satellite system (GNSS) receiver **100** exemplarily illustrated in FIG. **1.** While the number of secondary mixers **127a, 127b, 127c,** and **127d** and the accumulator and dump units **128a, 128b, 128c,** and **128d** of the mixed frequency correlator **122a** exemplarily illustrated in FIG. **3,** is the same as those of the standard correlators, the outputs generated by the accumulator and dump units **128a, 128b, 128c,** and **128d** of the mixed frequency correlator **122a** are one bit less compared to the standard correlators.

The global navigation satellite system (GNSS) receiver **100** requires four additional final stage adders and subtractors **108a** exemplarily illustrated in FIGS. 2-3, for generating the correlation values of the N samples of intermediate frequency (IF) data. The additional final stage adders and subtractors **108a** increase the logic area and the power consumption of the GNSS receiver **100**. The increase in the power consumption due to the additional final stage adders and subtractors **108a** will not be significant because the additional final stage adders and subtractors **108a** operate once for every output of the accumulator and dump units **128a, 128b, 128c,** and **128d** that is generated after adding N samples of the IF data which are sampled at $f_s$. Thus, the final stage adders and subtractors **108a** operate at $f_s$/N rate as compared to the rest of the components of the GNSS receiver **100** that operate at $f_s$, where N corresponds to the N samples of the input IF data. To reduce the effect of the increased logic area, these additional final stage adders and subtractors **108a** are time multiplexed across the M mixed frequency correlators **125** of the sequential chip mixed frequency correlator array system (SCMFCAS) **106.** The increase in the power consumption due to the addition of the four final stage adders and subtractors **108a** is negligible as the inputs to the time multiplexed final stage adders and subtractors **108a** arrive at a rate of $f_s$/N. The logic area contributed by the additional time multiplexed final stage adders and subtractors **108a** to each of the M mixed frequency correlators **125** of the SCMFCAS **106** in the GNSS receiver **100** is equal to the area of 4/N adders and subtractors. For example, in a typical GNSS receiver, N is equal to the number of samples within 1 millisecond (ms). If the sampling frequency $f_s$ is, for example, 16 MHz, then N= 16MHz * 1 ms = 16000. Therefore, increase in the logic area per mixed frequency correlator **125** of the SCMFCAS **106** will be equal to the area of (4/16000) adders and subtractors, which is insignificant and can be neglected.

The foregoing examples have been provided merely for the purpose of explanation and are in no way to be construed as limiting of the method and the sequential chip mixed frequency correlator array system (SCMFCAS) **106** deployed in the global navigation satellite system (GNSS) receiver **100** exemplarily illustrated in FIGS. **1-3,** disclosed herein. While the GNSS receiver **100** and the method have been described with reference to various embodiments, it is understood that the words, which have been used herein, are words of description and illustration, rather than words of limitation. Furthermore, although the GNSS receiver **100** and the method have been described herein with reference to particular means, materials, and embodiments, the GNSS receiver **100** and the method are not intended to be limited to the particulars disclosed herein; rather, the GNSS receiver **100** and the method extend to all functionally equivalent structures, methods and uses, that are within the scope of the appended claims. Those skilled in the art, having the benefit of the teachings of this specification, may effect numerous modifications thereto and changes may be made without departing from the scope and spirit of the GNSS receiver **100** and the method disclosed herein in their aspects.

**Claims**

1. A global navigation satellite system receiver **(100)** comprising:

a radio frequency (RF) down converter **(101),** a global navigation satellite system baseband engine **(102),** and a coprocessor **(114);**
said global navigation satellite system baseband engine **(102)** comprising a carrier frequency offset module **(103),** a satellite signal acquisition module **(104)** and a tracking module **(110);**
said satellite signal acquisition module **(104)** comprising a carrier generator and mixer **(105),** a sequential chip mixed frequency correlator array system **(106),** a selector **(107),** a post correlation unit **(108),** and a peak detector **(109);**
said sequential chip mixed frequency correlator array system **(106)** comprising P signal generators **(115, 123, 124)** deployed within said satellite signal acquisition module **(104),** each of said P signal generators **(115, 123, 124)** comprising:

a primary mixer **116** adapted to receive N samples of intermediate frequency data from said radio frequency down converter **(101)** and generate in-phase components and quadrature phase components of said received N samples of said intermediate frequency data by mixing said received N samples of said intermediate frequency data with a carrier reference signal locally generated by a local carrier generator **(117),** wherein said N samples of said intermediate frequency data correspond to a global navigation satellite system signal received by said radio frequency down converter **(101);**
a pseudo random noise code generator **(120)** adapted to generate a pseudo random noise code bit sequence, said generated pseudo random noise code bit sequence corresponding to said received global navigation satellite system signal;
Q mixed frequency correlators **(122a, 122b 122q)** operably connected to said primary mixer **(116)** and to said pseudo random noise code generator **(120)** via a linear feedback shift register **(121),** each of said Q mixed frequency correlators **(122a, 122b 122q)** comprising:

secondary mixers **(127a, 127b, 127c, 127d)** operably connected to said primary mixer **(116)** and adapted to generate discrete correlation components of said received N samples of said intermediate frequency data by mixing said generated in-phase components and said generated quadrature phase components of said received N samples of said intermediate frequency data with said generated pseudo random noise code bit sequence; and
accumulator and dump units **(128a, 128b, 128c, 128d)** operably connected to corresponding said secondary mixers **(127a, 127b, 127c, 127d)** and adapted to generate accumulated correlation components of said received N samples of said intermediate frequency data by coherently accumulating and dumping said generated discrete correlation components of said received N samples of said intermediate frequency data; and

said post correlation unit **(108)** comprising final stage adders and subtractors **(108a),** a coherent accumulator **(108b),** and a non-coherent accumulator **(108c);**

said final stage adders and subtractors **(108a)** operably connected to said sequential chip mixed frequency correlator array system **(106)** via said selector **(107),** wherein said final stage adders and subtractors **(108a)** are time division multiplexed and adapted to sequentially generate correlation values for a positive frequency and a negative frequency of said received N samples of said intermediate frequency data by combining said accumulated correlation components of said each of said Q mixed frequency correlators **(122a, 122b 122q)** from said each of said P signal generators **(115, 123, 124);** wherein time division multiplexing of said final stage adders and subtractors after said accumulation and said dumping of said generated discrete correlation components of said received N samples of said intermediate frequency data, and said generation of said correlation values for said positive frequency and said negative frequency of said received N samples of said intermediate frequency data using said accumulated correlation components of said each of said Q mixed frequency correlators **(122a, 122b 122q)** from said each of said P signal generators **(115, 123, 124)** reduce logic area of said sequential chip mixed frequency correlator array system **(106)** in said global navigation satellite system baseband engine **(102),** thereby reducing power consumption of said global navigation satellite system receiver **(100).**

2. The global navigation satellite system receiver **(100)** of claim 1, wherein said carrier frequency offset module **(103)** is operably connected to said radio frequency down converter **(101)** and said sequential chip mixed frequency correlator array system **(106),** said carrier frequency offset module **(103)** comprising:

an auxiliary local carrier generator **(103a)** adapted to generate an offsetting carrier reference signal, wherein said auxiliary local carrier generator **(103a)** operates at a sampling rate fs; and an auxiliary mixer **(103b)** operably connected to said auxiliary local carrier generator **(103a)** and said radio frequency down converter **(101)** for offsetting carrier frequency of said N samples of said intermediate frequency data to zero by mixing said N samples of said intermediate frequency data with said offsetting carrier reference signal, for further reducing said power consumption of said global navigation satellite system receiver **(100).**

3. The global navigation satellite system receiver **(100)** of claim 1, wherein said local carrier generator **(117)** operates at a frequency greater than twice of maximum Doppler frequency supported by said global navigation satellite system receiver **(100),** thereby precluding operation of said local carrier generator **(117)** at said sampling rate fs within said sequential chip mixed frequency correlator array system **(106),** and further reducing said power consumption of said global navigation satellite system receiver **(100).**

4. The global navigation satellite system receiver **(100)** of claim 3, wherein said frequency of operation of said local carrier generator **(117)** is selected using a Nyquist criterion.

5. The global navigation satellite system receiver **(100)** of claim 1, wherein:

said coherent accumulator **(108b)** operably connected to said final stage adders and subtractors **(108a)** is adapted to perform coherent integration of said generated correlation values corresponding to said positive frequency and said negative frequency of said received N samples of said intermediate frequency data over a predetermined duration of time to generate coherent integration values corresponding to said positive frequency and said negative frequency of said received N samples of said intermediate frequency data; said non-coherent accumulator **(108c)** operably connected to said coherent accumulator **(108b)** is adapted to perform non-coherent integration of said generated coherent integration values to generate non-coherent integration values corresponding to said positive frequency and said negative frequency of said received N samples of said intermediate frequency data; and said peak detector **(109)** operably connected to said non-coherent accumulator **(108c)** is adapted to perform acquisition checks on said generated non-coherent integration values corresponding to said positive frequency and said negative frequency of said received N samples of said intermediate frequency data against a threshold value.

6. The global navigation satellite system receiver **(100)** of claim 1, wherein said N samples of said intermediate frequency data comprise one of complex intermediate frequency data and real intermediate frequency data.

7. A method for generating correlation values for a positive frequency and a negative frequency of a global navigation satellite system signal received by a radio frequency down converter **(101)** of a global navigation satellite system receiver **(100),** said method comprising:

providing a sequential chip mixed frequency correlator array system **(106)** comprising P signal generators **(115, 123, 124)** deployed within a satellite signal acquisition module **(104),** each of said P signal generators **(115, 123, 124)** comprising a primary mixer **(116),** a local carrier generator **(117),** a pseudo random noise code generator **(120),** a linear feedback shift register **(121),** and Q mixed frequency correlators **(122a, 122b 122q),** each of said Q mixed frequency correlators **(122a, 122b 122q)** comprising secondary mixers **(127a, 127b, 127c, 127d)** operably connected to said primary mixer **(116),** and accumulator and dump units **(128a, 128b, 128c, 128d)** operably connected to corresponding said secondary mixers **(127a, 127b, 127c, 127d)**;

receiving N samples of intermediate frequency data from said radio frequency down converter **(101)** by said primary mixer **(116)** of said each of said P signal generators **(115, 123, 124)** of said sequential chip mixed frequency correlator array system **(106),** wherein said N samples of said intermediate frequency data correspond to said received global navigation satellite system signal;

generating in-phase components and quadrature phase components of said received N samples of said intermediate frequency data by mixing said received N samples of said intermediate frequency data with a carrier reference signal by said primary mixer **(116)** of said each of said P signal generators **(115, 123, 124),** said carrier reference signal locally generated by said local carrier generator **(117)**;

receiving said generated in-phase components, said generated quadrature phase components, and a pseudo random noise code bit sequence by said each of said Q mixed frequency correlators **(122a, 122b 122q),** wherein said pseudo random noise code bit sequence corresponds to said received global navigation satellite system signal, and wherein said pseudo random noise code bit sequence is generated using said pseudo random noise code generator **(120)**;

generating, by said secondary mixers **(127a, 127b, 127c, 127d)** of said each of said Q mixed frequency correlators **(122a, 122b 122q),** discrete correlation components of said received N samples of said intermediate frequency data by mixing said generated in-phase components and said generated quadrature phase components of said received N samples of said intermediate frequency data with said pseudo random noise code bit sequence;

generating accumulated correlation components of said received N samples of said intermediate frequency data by coherently accumulating and dumping said generated discrete correlation components of said received N samples of said intermediate frequency data by said accumulator and dump units **(128a, 128b, 128c, 128d)** of said each of said Q mixed frequency correlators **(122a, 122b 122q);** and

sequentially generating said correlation values for said positive frequency and said negative frequency of said received N samples of said intermediate frequency data by time division multiplexed final stage adders and subtractors **(108a)** operably connected to said sequential chip mixed frequency correlator array system **(106)** by combining said accumulated correlation components of said each of said Q mixed frequency correlators **(122a, 122b 122q)** from said each of said P signal generators **(115, 123, 124),** wherein

time division multiplexing of said final stage adders and said subtractors **(108a)** after said accumulation and said dumping of said generated discrete correlation components of said received N samples of said intermediate frequency data, and said generation of said correlation values for said positive frequency and said negative frequency of said received N samples of said intermediate frequency data using said accumulated correlation components of said each of said Q mixed frequency correlators **(122a, 122b 122q)** from said each of said P signal generators **(115, 123, 124)** reduce logic area of said sequential chip mixed frequency correlator array system **(106)** in said global navigation satellite system baseband engine **(102),** thereby reducing power consumption of said global navigation satellite system receiver **(100).**

8. The method of claim 7, further comprising offsetting carrier frequency of said N samples of said intermediate frequency data to zero by a carrier frequency offset module **(103)** operably connected to said radio frequency down converter **(101)** and said satellite signal acquisition module **(104)** and operating at a sampling rate fs, by mixing said N samples of said intermediate frequency data with an offsetting carrier reference signal for further reducing said power consumption of said global navigation satellite system receiver **(100).**

9. The method of claim 7, wherein said local carrier generator **(117)** operates at a frequency greater than twice of maximum Doppler frequency supported by said global navigation satellite system receiver **(100),** thereby precluding operation of said local carrier generator **(117)** at said sampling rate $f_s$ within said sequential chip mixed frequency correlator array system **(106),** and further reducing said power consumption of said global navigation satellite system receiver **(100)**.

10. The method of claim 9, further comprising selecting said frequency of operation of said local carrier generator using a Nyquist criterion.

11. The method of claim 7, further comprising performing coherent integration of said generated correlation values corresponding to said positive frequency and said negative frequency of said received N samples of said intermediate frequency data over a predetermined duration of time to generate coherent integration values corresponding to said positive frequency and said negative frequency of said received N samples of said intermediate frequency data by a coherent accumulator **(108b)** operably connected to said final stage adders and subtractors **(108a)**.

12. The method of claim 11, further comprising performing non-coherent integration of said generated coherent integration values to generate non-coherent integration values corresponding to said positive frequency and said negative frequency of said received N samples of said intermediate frequency data by a non-coherent accumulator (**108c**) operably connected to said coherent accumulator (**108b**).

13. The method of claim 12, further comprising performing acquisition checks on said generated non-coherent integration values corresponding to said positive frequency and said negative frequency of said received N samples of said intermediate frequency data against a threshold value by a peak detector **(109)** operably connected to said non-coherent accumulator **(108c)**.

14. The method of claim 7, wherein said N samples of said intermediate frequency data comprise one of complex intermediate frequency data and real intermediate frequency data.

**Patentansprüche**

1. Empfänger (100) eines globalen Navigationssatellitensystems, umfassend:

einen Radiofrequenz(RF)-Downconverter (101), eine Basisband-Maschine (102) eines globalen Navigationssatellitensystems, und einen Koprozessor (114);
die Basisband-Maschine (102) des globalen Navigationssatellitensystems umfassend ein Trägerfrequenz-Offsetmodul (103), ein Satellitensignal-Aufnahmemodul (104) und ein Verfolgungsmodul (110);
das Satellitensignal-Aufnahmemodul (104) umfassend einen Trägergenerator und - mischer (105), ein sequenzielles Chip-Mischfrequenz-Korrelator-Array-System (106), eine Wählvorrichtung (107), eine Post-Korrelationseinheit (108) und einen Spitzendetektor (109);
das sequenzielle Chip-Mischfrequenz-Korrelator-Array-System (106) umfassend P Signalgeneratoren (115, 123, 124), die innerhalb des Satellitensignal-Aufnahmemoduls (104) eingesetzt sind, wobei jeder der P Signalgeneratoren (115, 123, 124) umfasst:

einen primären Mischer (116), der zum Empfangen von N Proben von Zwischenfrequenzdaten vom Radiofrequenz-Downconverter (101) und zum Erzeugen von In-Phase-Komponenten und Quadratur-Phasen-Komponenten der empfangenen N Proben der Zwischenfrequenzdaten durch Mischen der empfangenen N Proben der Zwischenfrequenzdaten mit einem Trägerreferenzsignal, das lokal von einem lokalen Trägergenerator (117) erzeugt wird, adaptiert ist, wobei die N Proben der Zwischenfrequenzdaten einem Signal des globalen Navigationssatellitensystems entsprechen, das von dem Radiofrequenz-Downconverter (101) empfangen worden ist;
einen Pseudo-Random-Noise-Code-Generator (120), der zum Erzeugen einer Pseudo-Random-Noise-Code-Bit-Sequenz adaptiert ist, wobei die erzeugte Pseudo-Random-Noise-Code-Bit-Sequenz dem empfangenen Signal des globalen Navigationssatellitensystems entspricht;
Q Mischfrequenz-Korrelatoren (122a, 122b, 122q), die betriebsmäßig mit dem primären Mischer (116) und dem Pseudo-Random-Noise-Code-Generator (120) über ein lineares rückgekoppeltes Schieberegister (121) verbunden sind, wobei jeder der Q Mischfrequenz-Korrelatoren (122a, 122b, 122q) umfasst:

sekundäre Mischer (127a, 127b, 127c, 127d), die betriebsmäßig mit dem primären Mischer (116) verbunden und zum Erzeugen von diskreten Korrelationskomponenten der empfangenen N Proben der Zwischenfrequenzdaten durch Mischen der erzeugten In-Phase-Komponenten und der erzeugten Quadratur-Phasen-Komponenten der empfangenen N Proben der Zwischenfrequenzdaten mit der erzeugten Pseudo-Random-Noise-Code-Bit-Sequenz adaptiert sind; und
Akkumulator-und-Weitergabe-Einheiten (128a, 128b, 128c, 128d), die betriebsmäßig mit den entsprechenden sekundären Mischern (127a, 127b, 127c, 127d) verbunden und zum Erzeugen akkumulierter Korrelationskomponenten der empfangenen N Proben der Zwischenfrequenzdaten durch kohärentes Akkumulieren und Weitergeben der erzeugten diskreten Korrelationskomponenten der empfangenen N Proben der Zwischenfrequenzdaten adaptiert sind; und

die Post-Korrelations-Einheit (108) umfassend Endstufen-Addierer und -Subtrahierer (108a), einen kohärenten Akkumulator (108b) und einen nichtkohärenten Akkumulator (108c); die Endstufen-Addierer und -Subtrahierer (108a) betriebsmäßig verbunden mit dem sequenziellen Chip-Mischfrequenz-Korrelator-Array-System (106) über die Wählvorrichtung (107), wobei die Endstufen-Addierer und -Subtrahierer (108a) im Multiplexverfahren mit Zeitteilung betrieben werden und zum sequenziellen Erzeugen von Korrelationswerten für eine positive Frequenz und eine negative Frequenz der empfangenen N Proben der Zwischenfrequenzdaten durch Kombinieren der akkumulierten Korrelationskomponenten jedes der Q Mischfrequenz-Korrelatoren (122a, 122b, 122q) von jedem der P Signalgeneratoren (115, 123, 124) adaptiert sind; wobei Multiplexen mit Zeitteilung der Endstufen-Addierer und -Subtrahierer nach der Akkumulation und der Weitergabe der erzeugten diskreten Korrelationskomponenten der empfangenen N Proben der Zwischenfrequenzdaten, und die Erzeugung der Korrelationswerte der positiven Frequenz und der negativen Frequenz der empfangenen N Proben der Zwischenfrequenzdaten unter Verwendung der akkumulierten Korrelationskomponenten jedes der Q Mischfrequenz-Korrelatoren (122a, 122b, 122q) von jedem der P Signalgeneratoren (115, 123, 124) den Logikbereich des sequenziellen Chip-Mischfrequenz-Korrelator-Array-Systems (106) in der Basisband-Maschine (102) des globalen Navigationssatellitensystems reduzieren, womit der Stromverbrauch des Empfängers (100) des globalen Navigationssatellitensystems reduziert wird.

2. Empfänger (100) eines globalen Navigationssatellitensystems nach Anspruch 1, wobei das Trägerfrequenz-Offsetmodul (103) betriebsmäßig mit dem Radiofrequenz-Downconverter (101) und dem sequenziellen Chip-Mischfrequenz-Korrelator-Array-System (106) verbunden ist, wobei das Trägerfrequenz-Offsetmodul (103) umfasst:

einen lokalen Hilfsträgergenerator (103a), der zum Erzeugen eines verschiebenden Trägerreferenzsignals adaptiert ist, wobei der lokale Hilfsträgergenerator (103a) mit einer Abtastfrequenz $f_s$ arbeitet; und einen Hilfsmischer (103b), der betriebsmäßig mit dem lokalen Hilfsträgergenerator (103a) und dem Radiofrequenz-Downconverter (101) zum Verschieben der Trägerfrequenz der N Proben der Zwischenfrequenzdaten auf Null durch Mischen der N Proben der Zwischenfrequenzdaten mit dem verschiebenden Trägerreferenzsignal verbunden ist, um den Stromverbrauch des Empfängers (100) des globalen Navigationssatellitensystems weiter zu reduzieren.

3. Empfänger (100) eines globalen Navigationssatellitensystems nach Anspruch 1, wobei der lokale Trägergenerator (117) mit einer Frequenz, die größer als das Zweifache der maximalen vom Empfänger (100) des globalen Navigationssatellitensystems unterstützten Dopplerfrequenz arbeitet, wodurch Arbeiten des lokalen Trägergenerators (117) mit der Abtastfrequenz $f_s$ innerhalb des sequenziellen Chip-Mischfrequenz-Korrelator-Array-Systems (106) ausgeschlossen wird und der Stromverbrauch des Empfängers (100) des globalen Navigationssatellitensystems weiter reduziert wird.

4. Empfänger (100) eines globalen Navigationssatellitensystems nach Anspruch 3, wobei die Arbeitsfrequenz des lokalen Trägergenerators (117) unter Anwendung eines Nyquist-Kriteriums ausgewählt wird.

5. Empfänger (100) eines globalen Navigationssatellitensystems nach Anspruch 1, wobei:

der kohärente Akkumulator (108b), der betriebsmäßig mit den Endstufen-Addierern und -Subtrahierern (108a) verbunden ist, zum Durchführen einer kohärenten Integration der erzeugten Korrelationswerte, die der positiven Frequenz und der negativen Frequenz der empfangenen N Proben der Zwischenfrequenzdaten entsprechen, über eine vorbestimmte Zeitdauer adaptiert ist, um kohärente Integrationswerte zu erzeugen, die der positiven Frequenz und der negativen Frequenz der empfangenen N Proben der Zwischenfrequenzdaten entsprechen; der nichtkohärente Akkumulator (108c), der betriebsmäßig mit dem kohärenten Akkumulator (108b) verbunden ist, zum Durchführen einer nichtkohärenten Integration der erzeugten kohärenten Integrationswerte zum Erzeugen nichtkohärenter Integrationswerte, die der positiven Frequenz und der negativen Frequenz der empfangenen N Proben der Zwischenfrequenzdaten entsprechen, adaptiert ist; und

der Spitzendetektor (109), der betriebsmäßig mit dem nichtkohärenten Akkumulator (108c) verbunden ist, zum Durchführen von Aufnahmetests der erzeugten nichtkohärenten Integrationswerte, die der positiven Frequenz und der negativen Frequenz der empfangenen N Proben der Zwischenfrequenzdaten entsprechen, gegen einen Schwellenwert adaptiert ist.

6. Empfänger (100) eines globalen Navigationssatellitensystems nach Anspruch 1, wobei die N Proben der Zwischenfrequenzdaten eines von komplexen Zwischenfrequenzdaten und reellen Zwischenfrequenzdaten umfassen.

7. Verfahren zum Erzeugen von Korrelationswerten für eine positive Frequenz und eine negative Frequenz eines von einem Radiofrequenz-Downconverter (101) eines Empfängers (100) eines globalen Navigationssatellitensystems empfangenen Signals eines globalen Navigationssatellitensystems, wobei das Verfahren umfasst:

Bereitstellen eines sequenziellen Chip-Mischfrequenz-Korrelator-Array-Systems (106) umfassend P Signalgeneratoren (115, 123, 124), die innerhalb eines Satellitensignal-Aufnahmemoduls (104) eingesetzt sind, wobei jeder der P Signalgeneratoren (115, 123, 124) einen primären Mischer (116), einen lokalen Trägergenerator (117), einen Pseudo-Random-Noise-Code-Generator (120), ein lineares rückgekoppeltes Schieberegister (121) und Q Mischfrequenz-Korrelatoren (122a, 122b, 122q) umfasst, wobei jeder der Q Mischfrequenz-Korrelatoren (122a, 122b, 122q) sekundäre Mischer (127a, 127b, 127c, 127d), die betriebsmäßig mit dem primären Mischer (116) verbunden sind, und Akkumulator-und-Weitergabe-Einheiten (128a, 128b, 128c, 128d), die betriebsmäßig mit den entsprechenden sekundären Mischern (127a, 127b, 127c, 127d) verbunden sind, umfasst;
Empfangen von N Proben der Zwischenfrequenzdaten vom Radiofrequenz-Downconverter (101) durch den primären Mischer (116) jedes der P Signalgeneratoren (115, 123, 124) des sequenziellen Chip-Mischfrequenz-Korrelator-Array-Systems (106), wobei die N Proben der Zwischenfrequenzdaten dem empfangenen Signal des globalen Navigationssatellitensystems entsprechen;
Erzeugen von In-Phase-Komponenten und Quadratur-Phasen-Komponenten der empfangenen N Proben der Zwischenfrequenzdaten durch Mischen der empfangenen N Proben der Zwischenfrequenzdaten mit einem Trägerreferenzsignal durch den primären Mischer (116) jedes der P Signalgeneratoren (115, 123, 124), wobei das Trägerreferenzsignal lokal durch den lokalen Trägergenerator (117) erzeugt wird;
Empfangen der erzeugten In-Phase-Komponenten, der erzeugten Quadratur-Phasen-Komponenten und einer Pseudo-Random-Noise-Code-Bit-Sequenz durch jeden der Q Mischfrequenz-Korrelatoren (122a, 122b, 122q), wobei die Pseudo-Random-Noise-Code-Bit-Sequenz dem empfangenen Signal des globalen Navigationssatellitensystems entspricht, und wobei die Pseudo-Random-Noise-Code-Bit-Sequenz unter Verwendung des Pseudo-Random-Noise-Code-Generators (120) erzeugt wird;
Erzeugen durch die sekundären Mischer (127a, 127b, 127c, 127d) jedes der Q Mischfrequenz-Korrelatoren (122a, 122b, 122q) von diskreten Korrelationskomponenten der empfangenen N Proben der Zwischenfrequenzdaten durch Mischen der erzeugten In-Phase-Komponenten und der erzeugten Quadratur-Phasen-Komponenten der empfangenen N Proben der Zwischenfrequenzdaten mit der Pseudo-Random-Noise-Code-Bit-Sequenz;
Erzeugen akkumulierter Korrelationskomponenten der empfangenen N Proben der Zwischenfrequenzdaten durch kohärentes Akkumulieren und Weitergeben der erzeugten diskreten Korrelationskomponenten der empfangenen N Proben der Zwischenfrequenzdaten durch die Akkumulator- und Weitergabe-Einheiten (128a, 128b, 128c, 128d) jedes der Q Mischfrequenz-Korrelatoren (122a, 122b, 122q); und
sequenzielles Erzeugen der Korrelationswerte der positiven Frequenz und der negativen Frequenz der empfangenen N Proben der Zwischenfrequenzdaten durch mit Zeitteilung gemultiplexte Endstufen-Addierer und -Subtrahierer (108a), die betriebsmäßig mit dem sequenziellen Chip-Mischfrequenz-Korrelator-Array-System (106) verbunden sind, durch Kombinieren der akkumulierten Korrelationskomponenten jedes der Q Mischfrequenz-Korrelatoren (122a, 122b, 122q) von jedem der P Signalgeneratoren (115, 123, 124), wobei Multiplexen mit Zeitteilung der Endstufen-Addierer und -Subtrahierer (108a) nach der Akkumulation und Weitergabe der erzeugten diskreten Korrelationskomponenten der empfangenen N Proben der Zwischenfrequenzdaten, und Erzeugen der Korrelationswerte für die positive Frequenz und die negative Frequenz der empfangenen N Proben der Zwischenfrequenzdaten unter Verwendung der akkumulierten Korrelationskomponenten jedes der Q Mischfrequenz-Korrelatoren (122a, 122b, 122q) von jedem der P Signalgeneratoren (115, 123, 124) einen Logikbereich des sequenziellen Chip-Mischfrequenz-Korrelator-Array-Systems (106) in der Basisband-Maschine (102) des globalen Navigationssatellitensystems reduzieren, wodurch der Stromverbrauch des Empfängers (100) des globalen Navigationssatellitensystems reduziert wird.

8. Verfahren nach Anspruch 7, weiterhin umfassend Verschieben der Trägerfrequenz der N Proben der Zwischenfrequenzdaten auf Null durch ein Trägerfrequenz-Offsetmodul (103), das betriebsmäßig mit dem Radiofrequenz-Downconverter (101) und dem Satellitensignal-Aufnahmemodul (104) verbunden ist und mit einer Abtastfrequenz $f_s$ arbeitet, durch Mischen der N Proben der Zwischenfrequenzdaten mit einem verschiebenden Trägerreferenzsignal zum weiteren Reduzieren des Stromverbrauchs des Empfängers (100) des globalen Navigationssatellitensystems.

9. Verfahren nach Anspruch 7, wobei der lokale Trägergenerator (117) mit einer Frequenz, die größer als das Zweifache der maximalen vom Empfänger (100) des globalen Navigationssatellitensystems unterstützten Dopplerfrequenz arbeitet, wodurch Arbeiten des lokalen Trägergenerators (117) mit der Abtastfrequenz $f_s$ innerhalb des sequenziellen Chip-Mischfrequenz-Korrelator-Array-Systems (106) ausgeschlossen wird und der Stromverbrauch des Empfängers (100) des globalen Navigationssatellitensystems weiter reduziert wird.

10. Verfahren nach Anspruch 9, weiterhin umfassend Auswählen der Arbeitsfrequenz des lokalen Trägergenerators unter Anwendung eines Nyquist-Kriteriums.

11. Verfahren nach Anspruch 7, weiterhin umfassend Durchführen einer kohärenten Integration über eine vorbestimmte Zeitdauer der erzeugten Korrelationswerte, die der positiven Frequenz und der negativen Frequenz der empfangenen N Proben der Zwischenfrequenzdaten entsprechen, um kohärente Integrationswerte, die der positiven Frequenz und der negativen Frequenz der empfangenen N Proben der Zwischenfrequenzdaten entsprechen, zu erzeugen, durch einen kohärenten Akkumulator (108b), der betriebsmäßig mit den Endstufen-Addierern und -Subtrahierern (108a) verbunden ist.

12. Verfahren nach Anspruch 11, weiterhin umfassend Durchführen einer nichtkohärenten Integration der erzeugten kohärenten Integrationswerte, um nichtkohärente Integrationswerte zu erzeugen, die der positiven Frequenz und der negativen Frequenz der empfangenen N Proben der Zwischenfrequenzdaten entsprechen, durch einen nichtkohärenten Akkumulator (108c), der betriebsmäßig mit dem kohärenten Akkumulator (108b) verbunden ist.

13. Verfahren nach Anspruch 12, weiterhin umfassend Durchführen von Aufnahmetests der erzeugten nichtkohärenten Integrationswerte, die der positiven Frequenz und der negativen Frequenz der empfangenen N Proben der Zwischenfrequenzdaten entsprechen, gegen einen Schwellenwert durch einen Spitzendetektor (109), der betriebsmäßig mit dem nichtkohärenten Akkumulator (108c) verbunden ist.

14. Verfahren nach Anspruch 7, wobei die N Proben der Zwischenfrequenzdaten eines von komplexen Zwischenfrequenzdaten und reellen Zwischenfrequenzdaten umfassen.

**Revendications**

1. Un récepteur de système global de navigation par satellite (100) comprenant :

un convertisseur-abaisseur de radiofréquence (RF) (101), un moteur de bande de base de système global de navigation par satellite (102) et un coprocesseur (114), ledit moteur de bande de base de système global de navigation par satellite (102) comprenant un module de décalage de fréquence de porteuse (103), un module d'acquisition de signaux satellitaires (104) et un module de suivi (110), ledit module d'acquisition de signaux satellitaires (104) comprenant un générateur de porteuse et un mélangeur (105), un système de matrice de corrélateurs de fréquence mélangée à puce séquentielle (106), un sélecteur (107), une unité de post-corrélation (108) et un détecteur de crête (109), ledit système de matrice de corrélateurs de fréquence mélangée à puce séquentielle (106) comprenant P générateurs de signaux (115, 123, 124) déployés à l'intérieur dudit module d'acquisition de signaux satellitaires (104), chacun desdits P générateurs de signaux (115, 123, 124) comprenant :

un mélangeur primaire (116) adapté de façon à recevoir N échantillons de données de fréquence intermédiaire à partir dudit convertisseur-abaisseur de radiofréquence (101) et à générer des composants en phase et des composants en quadrature de phase desdits N échantillons reçus desdites données de fréquence intermédiaire par le mélange desdits N échantillons reçus desdites données de fréquence intermédiaire avec un signal de référence de porteuse généré localement par un générateur de porteuse locale (117), où lesdits N échantillons desdites données de fréquence intermédiaire correspondent à un signal de système global de navigation par satellite reçu par ledit convertisseur-abaisseur de radiofréquence (101),

un générateur de code de bruit pseudo-aléatoire (120) adapté de façon à générer une séquence binaire de code de bruit pseudo-aléatoire, ladite séquence binaire de code de bruit pseudo-aléatoire générée correspondant audit signal de système global de navigation par satellite reçu,

Q corrélateurs de fréquence mélangée (122a, 122b, 122q) raccordés de manière opérationnelle audit mélangeur primaire (116) et audit générateur de code de bruit pseudo-aléatoire (120) par l'intermédiaire d'un registre de décalage de rétroaction linéaire (121), chacun desdits Q corrélateurs de fréquence mélangée (122a, 122b, 122q) comprenant :

> des mélangeurs secondaires (127a, 127b, 127c, 127d) raccordés de manière opérationnelle audit mélangeur primaire (116) et
>
> adaptés de façon à générer des composants de corrélation discrets desdits N échantillons reçus desdites données de fréquence intermédiaire par le mélange desdits composants en phase générés et desdits composants en quadrature de phase générés desdits N échantillons reçus desdites données de fréquence intermédiaire avec ladite séquence binaire de code de bruit pseudo-aléatoire générée, et
>
> des unités d'accumulation et de décharge (128a, 128b, 128c, 128d) raccordées de manière opérationnelle auxdits mélangeurs secondaires correspondants (127a, 127b, 127c, 127d) et adaptées de façon à générer des composants de corrélation accumulés desdits N échantillons reçus desdites données de fréquence intermédiaire par l'accumulation et la décharge cohérentes desdits composants de corrélation discrets générés desdits N échantillons reçus desdites données de fréquence intermédiaire, et

ladite unité de post-corrélation (108) comprenant des additionneurs et des soustracteurs d'étape finale (108a), un accumulateur cohérent (108b) et un accumulateur non cohérent (108c), lesdits additionneurs et soustracteurs d'étape finale (108a) étant raccordés de manière opérationnelle audit système de matrice de corrélateurs de fréquence mélangée à puce séquentielle (106) par l'intermédiaire dudit sélecteur (107), où lesdits additionneurs et soustracteurs d'étape finale (108a) sont multiplexés par répartition dans le temps et adaptés de façon à générer séquentiellement des valeurs de corrélation destinées à une fréquence positive et une fréquence négative desdits N échantillons reçus desdites données de fréquence intermédiaire par la combinaison desdits composants de corrélation accumulés dudit chacun desdits Q corrélateurs de fréquence mélangée (122a, 122b, 122q) à partir dudit chacun desdits P générateurs de signaux (115, 123, 124),

où le multiplexage par répartition dans le temps desdits additionneurs et soustracteurs d'étape finale après ladite accumulation et ladite décharge desdits composants de corrélation discrets générés desdits N échantillons reçus desdites données de fréquence intermédiaire, et ladite génération desdites valeurs de corrélation destinées à ladite fréquence positive et à ladite fréquence négative desdits N échantillons reçus desdites données de fréquence intermédiaire au moyen desdits composants de corrélation accumulés dudit chacun desdits Q corrélateurs de fréquence mélangée (122a, 122b, 122q) à partir dudit chacun desdits P générateurs de signaux (115, 123, 124) réduisent une zone logique dudit système de matrice de corrélateurs de fréquence mélangée à puce séquentielle (106) dans ledit moteur de bande de base de système global de navigation par satellite (102), réduisant ainsi une consommation électrique dudit récepteur de système global de navigation par satellite (100).

2. Le récepteur de système global de navigation par satellite (100) selon la Revendication 1, où ledit module de décalage de fréquence de porteuse (103) est raccordé de manière opérationnelle audit convertisseur-abaisseur de radiofréquence (101) et audit système de matrice de corrélateurs de fréquence mélangée à puce séquentielle (106), ledit module de décalage de fréquence de porteuse (103) comprenant :

> un générateur de porteuse locale auxiliaire (103a) adapté de façon à générer un signal de référence de porteuse de décalage, où ledit générateur de porteuse locale auxiliaire (103a) fonctionne à un taux d'échantillonnage $f_s$, et
>
> un mélangeur auxiliaire (103b) raccordé de manière opérationnelle audit générateur de porteuse locale auxiliaire (103a) et audit convertisseur-abaisseur de radiofréquence (101) de façon à décaler la fréquence de porteuse desdits N échantillons desdites données de fréquence intermédiaire vers zéro par le mélange desdits N échantillons desdites données de fréquence intermédiaire avec ledit signal de référence de porteuse de décalage, de façon à réduire encore ladite consommation électrique dudit récepteur de système global de navigation par satellite (100).

3. Le récepteur de système global de navigation par satellite (100) selon la Revendication 1, où ledit générateur de porteuse locale (117) fonctionne à une fréquence supérieure à deux fois la fréquence Doppler maximale prise en charge par ledit récepteur de système global de navigation par satellite (100), empêchant ainsi le fonctionnement dudit générateur de porteuse locale (117) audit taux d'échantillonnage $f_s$ à l'intérieur dudit système de matrice de corrélateurs de fréquence mélangée à puce séquentielle (106), et réduisant encore ladite consommation électrique dudit récepteur de système global de navigation par satellite (100).

4. Le récepteur de système global de navigation par satellite (100) selon la Revendication 3, où ladite fréquence de fonctionnement dudit générateur de porteuse locale (117) est sélectionnée au moyen d'un critère de Nyquist.

5. Le récepteur de système global de navigation par satellite (100) selon la Revendication 1, où :

ledit accumulateur cohérent (108b) raccordé de manière opérationnelle auxdits additionneurs et soustracteurs d'étape finale (108a) est adapté de façon à exécuter une intégration cohérente desdites valeurs de corrélation générées correspondant à ladite fréquence positive et à ladite fréquence négative desdits N échantillons reçus desdites données de fréquence intermédiaire sur une durée prédéterminée de façon à générer des valeurs d'intégration cohérente correspondant à ladite fréquence positive et à ladite fréquence négative desdits N échantillons reçus desdites données de fréquence intermédiaire, ledit accumulateur non cohérent (108c) raccordé de manière opérationnelle audit accumulateur cohérent (108b) est adapté de façon à exécuter une intégration non cohérente desdites valeurs d'intégration cohérente générées de façon à générer des valeurs d'intégration non cohérente correspondant à ladite fréquence positive et à ladite fréquence négative desdits N échantillons reçus desdites données de fréquence intermédiaire, et ledit détecteur de crête (109) raccordé de manière opérationnelle audit accumulateur non cohérent (108c) est adapté de façon à exécuter des contrôles d'acquisition sur lesdites valeurs d'intégration non cohérente générées correspondant à ladite fréquence positive et à ladite fréquence négative desdits N échantillons reçus desdites données de fréquence intermédiaire vis-à-vis d'une valeur seuil.

6. Le récepteur de système global de navigation par satellite (100) selon la Revendication 1, où lesdits N échantillons desdites données de fréquence intermédiaire comprennent des données parmi des données de fréquence intermédiaire complexes et des données de fréquence intermédiaire réelles.

7. Un procédé de génération de valeurs de corrélation destinées à une fréquence positive et une fréquence négative d'un signal de système global de navigation par satellite reçu par un convertisseur-abaisseur de radiofréquence (101) d'un récepteur de système global de navigation par satellite (100), ledit procédé comprenant :

la fourniture d'un système de matrice de corrélateurs de fréquence mélangée à puce séquentielle (106) comprenant P générateurs de signaux (115, 123, 124) déployés à l'intérieur d'un module d'acquisition de signaux satellitaires (104), chacun desdits P générateurs de signaux (115, 123, 124) comprenant un mélangeur primaire (116), un générateur de porteuse locale (117), un générateur de code de bruit pseudo-aléatoire (120), un registre de décalage de rétroaction linéaire (121) et Q corrélateurs de fréquence mélangée (122a, 122b, 122q), chacun desdits Q corrélateurs de fréquence mélangée (122a, 122b, 122q) comprenant des mélangeurs secondaires (127a, 127b, 127c, 127d) raccordés de manière opérationnelle audit mélangeur primaire (116), et des unités d'accumulation et de décharge (128a, 128b, 128c, 128d) raccordées de manière opérationnelle auxdits mélangeurs secondaires correspondants (127a, 127b, 127c, 127d), la réception de N échantillons de données de fréquence intermédiaire à partir dudit convertisseur-abaisseur de radiofréquence (101) par ledit mélangeur primaire (116) dudit chacun desdits P générateurs de signaux (115, 123, 124) dudit système de matrice de corrélateurs de fréquence mélangée à puce séquentielle (106), où lesdits N échantillons desdites données de fréquence intermédiaire correspondent audit signal de système global de navigation par satellite reçu, la génération de composants en phase et de composants en quadrature de phase desdits N échantillons reçus desdites données de fréquence intermédiaire par le mélange desdits N échantillons reçus desdites données de fréquence intermédiaire avec un signal de référence de porteuse par ledit mélangeur primaire (116) dudit chacun desdits P générateurs de signaux (115, 123, 124), ledit signal de référence de porteuse étant généré localement par ledit générateur de porteuse locale (117),

la réception desdits composants en phase générés, desdits composants en quadrature de phase générés et d'une séquence binaire de code de bruit pseudo-aléatoire par ledit chacun desdits Q corrélateurs de fréquence mélangée (122a, 122b, 122q), où ladite séquence binaire de code de bruit pseudo-aléatoire correspond audit signal de système global de navigation par satellite reçu, et

où ladite séquence binaire de code de bruit pseudo-aléatoire est générée au moyen dudit générateur de code de bruit pseudo-aléatoire (120),

la génération, par lesdits mélangeurs secondaires (127a, 127b, 127c, 127d) dudit chacun desdits Q corrélateurs de fréquence mélangée (122a, 122b, 122q), de composants de corrélation discrets desdits N échantillons reçus desdites données de fréquence intermédiaire par le mélange desdits composants en phase générés et desdits composants en quadrature de phase générés desdits N échantillons reçus desdites données de fréquence intermédiaire avec ladite séquence binaire de code de bruit pseudo-aléatoire,

la génération de composants de corrélation accumulés desdits N échantillons reçus desdites données de fréquence intermédiaire par l'accumulation et la décharge cohérentes desdits composants de corrélation discrets générés desdits N échantillons reçus desdites données de fréquence intermédiaire par lesdites unités d'accumulation et de décharge (128a, 128b, 128c, 128d) dudit chacun desdits Q corrélateurs de fréquence mélangée (122a, 122b, 122q), et

la génération séquentielle desdites valeurs de corrélation destinées à ladite fréquence positive et à ladite fréquence négative desdits N échantillons reçus desdites données de fréquence intermédiaire par des additionneurs et des soustracteurs d'étape finale multiplexés par répartition dans le temps (108a) raccordés de manière opérationnelle audit système de matrice de corrélateurs de fréquence mélangée à puce séquentielle (106) par la combinaison desdits composants de corrélation accumulés dudit chacun desdits Q corrélateurs de fréquence mélangée (122a, 122b, 122q) à partir dudit chacun desdits P générateurs de signaux (115, 123, 124), où le multiplexage par répartition dans le temps desdits additionneurs et desdits soustracteurs d'étape finale (108a) après ladite accumulation et ladite décharge desdits composants de corrélation discrets générés desdits N échantillons reçus desdites données de fréquence intermédiaire, et ladite génération desdites valeurs de corrélation destinées à ladite fréquence positive et à ladite fréquence négative desdits N échantillons reçus desdites données de fréquence intermédiaire au moyen desdits composants de corrélation accumulés dudit chacun desdits Q corrélateurs de fréquence mélangée (122a, 122b, 122q) à partir dudit chacun desdits P générateurs de signaux (115, 123, 124) réduisent une zone logique dudit système de matrice de corrélateurs de fréquence mélangée à puce séquentielle (106) dans ledit moteur de bande de base de système global de navigation par satellite (102), réduisant ainsi une consommation électrique dudit récepteur de système global de navigation par satellite (100).

**8.** Le procédé selon la Revendication 7, comprenant en outre le décalage d'une fréquence de porteuse desdits N échantillons desdites données de fréquence intermédiaire vers zéro par un module de décalage de fréquence de porteuse (103) raccordé de manière opérationnelle audit convertisseur-abaisseur de radiofréquence (101) et audit module d'acquisition de signaux satellitaires (104) et fonctionnant à un taux d'échantillonnage $f_s$, par le mélange desdits N échantillons desdites données de fréquence intermédiaire avec un signal de référence de porteuse de décalage de façon à réduire encore ladite consommation électrique dudit récepteur de système global de navigation par satellite (100).

**9.** Le procédé selon la Revendication 7, où ledit générateur de porteuse locale (117) fonctionne à une fréquence supérieure à deux fois la fréquence Doppler maximale prise en charge par ledit récepteur de système global de navigation par satellite (100), empêchant ainsi le fonctionnement dudit générateur de porteuse locale (117) audit taux d'échantillonnage $f_s$ à l'intérieur dudit système de matrice de corrélateurs de fréquence mélangée à puce séquentielle (106), et réduisant encore ladite consommation électrique dudit récepteur de système global de navigation par satellite (100).

**10.** Le procédé selon la Revendication 9, comprenant en outre la sélection de ladite fréquence de fonctionnement dudit générateur de porteuse locale au moyen d'un critère de Nyquist.

**11.** Le procédé selon la Revendication 7, comprenant en outre l'exécution d'une intégration cohérente desdites valeurs de corrélation générées correspondant à ladite fréquence positive et à ladite fréquence négative desdits N échantillons reçus desdites données de fréquence intermédiaire sur une durée prédéterminée de façon à générer des valeurs d'intégration cohérente correspondant à ladite fréquence positive et à ladite fréquence négative desdits N échantillons reçus desdites données de fréquence intermédiaire par un accumulateur cohérent (108b) raccordé de manière opérationnelle auxdits additionneurs et soustracteurs d'étape finale (108a).

12. Le procédé selon la Revendication 11, comprenant en outre l'exécution d'une intégration non cohérente desdites valeurs d'intégration cohérente générées de façon à générer des valeurs d'intégration non cohérente correspondant à ladite fréquence positive et à ladite fréquence négative desdits N échantillons reçus desdites données de fréquence intermédiaire par un accumulateur non cohérent (108c) raccordé de manière opérationnelle audit accumulateur cohérent (108b).

13. Le procédé selon la Revendication 12, comprenant en outre l'exécution de contrôles d'acquisition sur lesdites valeurs d'intégration non cohérente générées correspondant à ladite fréquence positive et à ladite fréquence négative desdits N échantillons reçus desdites données de fréquence intermédiaire vis-à-vis d'une valeur seuil par un détecteur de crête (109) raccordé de manière opérationnelle audit accumulateur non cohérent (108c).

14. Le procédé selon la Revendication 7, où lesdits N échantillons desdites données de fréquence intermédiaire comprennent des données parmi des données de fréquence intermédiaire complexes et des données de fréquence intermédiaire réelles.

FIG. 1

**FIG. 2**

**115**

ac    **127a**    **128a** **122a**    I₁    **107**

$\sum_{K=1}^{N}$

bd    **127b**    **128b**    I₂

$\sum_{K=1}^{N}$

**120**

PSEUDO
RANDOM
NOISE CODE
GENERATOR

IF DATA    **116**
(a, b) @ fₛ

**119**

(c, d)    **118**

CODE
NUMERICALLY
CONTROLLED
OSCILLATOR

PHASE TO
AMPLITUDE
CONVERTER (PAC)

bc    **127c**    **128c**    Q₁

$\sum_{K=1}^{N}$

**117**

LOCAL CARRIER
GENERATOR
(LCG)

ad    **127d**    **128d**    Q₂

$\sum_{K=1}^{N}$

**108**

POST CORRELATION UNIT

FINAL STAGE
ADDERS/SUBTRACTORS    **108a**

I₊f  Q₊f    I_f  Q₋f

COHERENT
ACCUMULATOR    **108b**

I₊fc  Q₊fc    I_fc  Q₋fc

NON-COHERENT
ACCUMULATOR    **108c**

V₊f    V₋f

OPERATES @ fₛ/N; ALLOWS TIME DIVISION
MULTIPLEXING ACROSS MULTIPLE MIXED
FREQUENCY CORRELATORS

OPERATES @ fₛ

**FIG. 3**

**102**

GLOBAL NAVIGATION SATELLITE SYSTEM BASEBAND ENGINE

**103**

CARRIER
FREQUENCY
OFFSET MODULE

**104**

SATELLITE SIGNAL
ACQUISITION MODULE

**103b**

**106**

BANK OF M
MIXED
FREQUENCY
CORRELATORS

**103a**

AUXILIARY
LOCAL
CARRIER
GENERATOR

M

3

2

1

TRACKING
CHANNEL

**110**

**FIG. 4**

501

PROVIDE A SEQUENTIAL CHIP MIXED FREQUENCY CORRELATOR ARRAY SYSTEM COMPRISING P SIGNAL GENERATORS

502

RECEIVE N SAMPLES OF INTERMEDIATE FREQUENCY (IF) DATA FROM A RADIO FREQUENCY DOWN CONVERTER USING A PRIMARY MIXER OF EACH OF THE P SIGNAL GENERATORS

503

GENERATE INPHASE COMPONENTS AND QUADRATURE PHASE COMPONENTS OF THE RECEIVED N SAMPLES OF THE IF DATA BY MIXING THE RECEIVED N SAMPLES OF THE IF DATA WITH A LOCALLY GENERATED CARRIER REFERENCE SIGNAL USING THE PRIMARY MIXER OF EACH OF THE P SIGNAL GENERATORS

504

RECEIVE THE GENERATED INPHASE COMPONENTS, THE GENERATED QUADRATURE PHASE COMPONENTS, AND A PSEUDO RANDOM NOISE (PRN) CODE BIT SEQUENCE BY EACH OF THE Q MIXED FREQUENCY CORRELATORS

505

GENERATE DISCRETE CORRELATION COMPONENTS OF THE RECEIVED N SAMPLES OF THE IF DATA BY MIXING THE GENERATED INPHASE COMPONENTS AND THE GENERATED QUADRATURE PHASE COMPONENTS OF THE RECEIVED N SAMPLES OF THE IF DATA WITH THE PRN CODE BIT SEQUENCE USING SECONDARY MIXERS OF EACH OF THE Q MIXED FREQUENCY CORRELATORS

506

GENERATE ACCUMULATED CORRELATION COMPONENTS OF THE RECEIVED N SAMPLES OF THE IF DATA BY COHERENTLY ACCUMULATING AND DUMPING THE GENERATED DISCRETE CORRELATION COMPONENTS OF THE RECEIVED N SAMPLES OF THE IF DATA USING ACCUMULATOR AND DUMP UNITS OF EACH OF THE Q MIXED FREQUENCY CORRELATORS

507

SEQUENTIALLY GENERATE CORRELATION VALUES FOR A POSITIVE FREQUENCY AND A NEGATIVE FREQUENCY OF THE RECEIVED N SAMPLES OF THE IF DATA BY COMBINING THE ACCUMULATED CORRELATION COMPONENTS OF EACH OF THE Q MIXED FREQUENCY CORRELATORS FROM EACH OF P SIGNAL GENERATORS USING TIME DIVISION MULTIPLEXED ADDERS AND SUBTRACTORS OPERABLY CONNECTED TO THE SEQUENTIAL CHIP MIXED FREQUENCY CORRELATOR ARRAY SYSTEM

**FIG. 5**

**601**

ARRANGE P SIGNAL GENERATORS CONSECUTIVELY

**602**

PROVIDE A SINGLE LOCAL CARRIER GENERATOR AND A SINGLE PSEUDO RANDOM NOISE (PRN) CODE GENERATOR WITHIN EACH OF THE P SIGNAL GENERATORS

**603**

PROVIDE A SPACING OF "$T_C$" BETWEEN EACH OF Q PRN CODE BIT SEQUENCES WITHIN EACH OF THE P SIGNAL GENERATORS

**604**

PROGRAM THE SINGLE LOCAL CARRIER GENERATOR AND THE SINGLE PRN CODE GENERATOR OF AN "Ath" SIGNAL GENERATOR AND AN "A+1th" SIGNAL GENERATOR WITH THE SAME CODE CHIP OFFSET, A DIFFERENT CARRIER SIGNAL FREQUENCY, A DIFFERENT CODE FREQUENCY, AND A DIFFERENT CODE PHASE OFFSET

**605**

GENERATE THE Q PRN CODE BIT SEQUENCES BASED ON A PROGRAMMABLE PARAMETER USING THE PRN CODE GENERATOR

**606**

GENERATE Q ACCUMULATED CORRELATION COMPONENTS $I_1$, $Q_1$, $I_2$, AND $Q_2$

**FIG. 6**

701

INPUT N SAMPLES OF INTERMEDIATE FREQUENCY (IF) DATA OF A GLOBAL NAVIGATION SATELLITE SYSTEM (GNSS) SIGNAL FROM A RADIO FREQUENCY DOWN CONVERTER

702

IS THE INTERMEDIATE FREQUENCY OF THE N SAMPLES OF THE IF DATA A ZERO FREQUENCY?

YES

NO

703

BRING THE CARRIER FREQUENCY OF THE N SAMPLES OF THE IF DATA TO A ZERO OR NEAR ZERO FREQUENCY BY MIXING THE N SAMPLES OF THE IF DATA WITH A LOCALLY GENERATED CARRIER REFERENCE SIGNAL OF A NEGATIVE INTERMEDIATE FREQUENCY

704

INPUT ZERO OR NEAR ZERO OFFSET IF DATA INPHASE COMPONENTS (a) AND/OR QUADRATURE PHASE COMPONENTS (b) INTO THE SEQUENTIAL CHIP MIXED FREQUENCY CORRELATOR ARRAY SYSTEM

705

GENERATE AN INPHASE COMPONENT (c) AND A QUADRATURE PHASE COMPONENT (d) OF A LOCAL CARRIER REFERENCE SIGNAL WITH FREQUENCY +f USING A LOCAL CARRIER GENERATOR RUNNING AT $f_{NCO}$

706

MIX THE RECEIVED N SAMPLES OF THE IF DATA WITH THE LOCALLY GENERATED CARRIER REFERENCE SIGNAL TO GENERATE INPHASE COMPONENTS (ac, bd) AND QUADRATURE PHASE COMPONENTS (bc, ad)

A

**FIG. 7A**

A

**707**

GENERATE A PSEUDO RANDOM NOISE (PRN) CODE BIT SEQUENCE CORRESPONDING TO THE GNSS SIGNAL

**708**

MIX THE PRN CODE BIT SEQUENCE WITH THE INPHASE COMPONENTS (ac, bd) AND THE QUADRATURE PHASE COMPONENTS (bc, ad) TO GENERATE DISCRETE CORRELATION COMPONENTS

**709**

COHERENTLY ACCUMULATE THE DISCRETE CORRELATION COMPONENTS OVER A PERIOD OF LENGTH OF THE N SAMPLES OF THE IF DATA TO GENERATE ACCUMULATED CORRELATION COMPONENTS $I_1$, $I_2$, $Q_1$, AND $Q_2$

**710**

GENERATE INPHASE AND QUADRATURE PHASE CORRELATION VALUES THAT CORRESPOND TO A POSITIVE FREQUENCY AND A NEGATIVE FREQUENCY USING THE ACCUMULATED CORRELATION COMPONENTS: $I_{+f} = I_1 - I_2$; $Q_{+f} = Q_1 + Q_2$; $I_{-f} = I_1 + I_2$; AND $Q_{-f} = Q_1 - Q_2$;

**711**

COHERENTLY ACCUMULATE $I_{+f}$, $Q_{+f}$, $I_{-f}$, AND $Q_{-f}$ OVER A PREDETERMINED PERIOD OF TIME TO GENERATE COHERENT INTEGRATION VALUES $I_{+fc}$, $Q_{+fc}$, $I_{-fc}$, AND $Q_{-fc}$ RESPECTIVELY

**712**

PERFORM NON-COHERENT ACCUMULATION OF THE COHERENT INTEGRATION VALUES $I_{+fc}$, $Q_{+fc}$, $I_{-fc}$, AND $Q_{-fc}$ OVER A PREDETERMINED DURATION OF TIME TO GENERATE NON-COHERENT INTEGRATION VALUES $V_{+F}$ AND $V_{-F}$

**713**

PERFORM ACQUISITION CHECKS ON THE NON-COHERENT INTEGRATION VALUES $V_{+F}$ AND $V_{-F}$ CORRESPONDING TO A POSITIVE FREQUENCY AND A NEGATIVE FREQUENCY OF THE RECEIVED N SAMPLES OF THE IF DATA

**FIG. 7B**

| PARAMETER NAME | EXPRESSION | | BIT WIDTHS | |
|---|---|---|---|---|
| | STANDARD CORRELATOR | MIXED FREQUENCY CORRELATOR | STANDARD CORRELATOR | MIXED FREQUENCY CORRELATOR |
| IF DATA INPUT | a, b | a, b | 2 bits, each | 2 bits, each |
| LOCALLY GENERATED CARRIER REFERENCE SIGNAL | c, d | c, d | 2 bits, each | 2 bits, each |
| REAL/IMAGINARY COMPONENTS MIXING (WITHIN THE PRIMARY/COMPLEX MIXER) | ac, bd, ad, bc | ac, bd, bc, ad | 4 bits, each | 4 bits, each |
| ADDER AND SUBTRACTOR IN THE PRIMARY MIXER | (ac − bd) (ad + bc) | - | 5 bits, each | - |
| SECONDARY MIXER/SIMPLE MIXER OUTPUT (CODE) | (ac − bd) * 1-bit code | ac*1-bit code bd*1-bit code | 5 bits | 4 bits, each |
| | (ad + bc) * 1-bit code | bc*1-bit code ad*1-bit code | 5 bits | 4 bits, each |
| ACCUMULATOR AND DUMP WIDTH | $I_f, Q_f$ | - | 5 bits + log2(N) | - |
| ACCUMULATOR AND DUMP WIDTH | - | $I_1, I_2, Q_1, Q_2$ | - | 4 bits + log2(N) |
| TIME MULTIPLEXED ADDERS AND SUBTRACTORS | - | $I_{+f}, Q_{+f}, I_{-f}, Q_{-f}$ | - | 5 bits + log2(N) |

**FIG. 8**

| PRIMITIVE | 2-STANDARD CORRELATORS | MIXED FREQUENCY CORRELATOR | RATE OF OPERATION |
|---|---|---|---|
| REAL/IMAGINARY COMPONENTS MIXING | 8 | 4 | $f_s$ |
| ADDER AND SUBTRACTOR IN PRIMARY MIXER | 4 | 0 | $f_s$ |
| LOCAL CARRIER GENERATOR (32-BIT NCO AND PHASE-TO-AMPLITUDE CONVERTER) | 2 | 1 | $f_{NCO}$ |
| PSEUDO RANDOM NOISE CODE GENERATOR (32-BIT NCO, LINEAR FEEDBACK SHIFT REGISTER BASED CODE GENERATOR WITH TWO POLYNOMIALS) | 2 | 1 | $f_s$ |
| SECONDARY MIXER/SIMPLE MIXER (CODE) | 4 | 4 | $f_s$ |
| ACCUMULATOR AND DUMP UNITS | 4 | 4 (bit width is less by 1) | $f_s$ |
| TIME MULTIPLEXED ADDERS AND SUBTRACTORS | 0 | 4 | $f_s/N$ |

**FIG. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110241938 A1
- US 6151353 A
- WO 2002023327 A1